Europäisches Patentamt

(19) European Patent Office

Office européen des brevets

(11) EP 0 769 482 B1

(12) **EUROPEAN PATENT SPECIFICATION**

(45) Date of publication and mention
of the grant of the patent:
**14.11.2001 Bulletin 2001/46**

(51) Int Cl.$^7$: **C04B 28/02**, C04B 40/00
// (C04B28/02, 22:00, 22:14,
22:16)

(21) Application number: **96116357.3**

(22) Date of filing: **11.10.1996**

(54) **Spraying material and spraying method employing it**

Sprühmaterial und Zerstäubungsverfahren das dieses Material verwendet

Matériau pour pulvérisation et procédé de pulvérisation utilisant celui-ci

(84) Designated Contracting States:
**AT CH DE FR LI**

(30) Priority: **17.10.1995 JP 26817895**

(43) Date of publication of application:
**23.04.1997 Bulletin 1997/17**

(73) Proprietor: **DENKI KAGAKU KOGYO KABUSHIKI
KAISHA
Chiyoda-ku Tokyo (JP)**

(72) Inventors:
• **Araki, Akitoshi, Denki Kagaku Kogyo K.K.
Oumi-cho, Nishikubiki-gun, Niigata-ken (JP)**
• **Hirano, Kenkichi, Denki Kagaku Kogyo K.K.
Oumi-cho, Nishikubiki-gun, Niigata-ken (JP)**
• **Mizushima, Kazuyuki, Denki Kagaku Kogyo K.K.
Oumi-cho, Nishikubiki-gun, Niigata-ken (JP)**
• **Terashima, Isao, Denki Kagaku Kogyo K.K.
Oumi-cho, Nishikubiki-gun, Niigata-ken (JP)**
• **Iwasaki, Masahiro, Denki Kagaku Kogyo K.K.
Oumi-cho, Nishikubiki-gun, Niigata-ken (JP)**
• **Watanabe, Akira, Denki Kagaku Kogyo K.K.
Oumi-cho, Nishikubiki-gun, Niigata-ken (JP)**

(74) Representative:
**Wächtershäuser, Günter, Prof. Dr.
Patentanwalt,
Tal 29
80331 München (DE)**

(56) References cited:
**EP-A- 0 352 583        FR-A- 2 233 295
US-A- 4 390 371**

• **DATABASE WPI Section Ch, Week 8819 Derwent
Publications Ltd., London, GB; Class L02, AN
88-130687 XP002023889 & JP-A-63 075 085
(DAIICHI CEMENT KK) , 5 April 1988**
• **CHEMICAL ABSTRACTS, vol. 123, no. 8, 21
August 1995 Columbus, Ohio, US; abstract no.
91407, HAYAKAWA MAKOTO & AL.:
"Rapid-setting cement-asphalt grout for railroad
and its injection method" XP002023887 &
JP-A-07 069 698 (HIGASHI NIPPON RYOKAKU
TETSUDO)**
• **PATENT ABSTRACTS OF JAPAN vol. 017, no.
513 (C-1111), 16 September 1993 & JP-A-05
139804 (DENKI KAGAKU KOGYO KK), 8 June
1993,**
• **CHEMICAL ABSTRACTS, vol. 113, no. 24, 10
December 1990 Columbus, Ohio, US; abstract
no. 217052e, SATO TERUYUKI: "Setting
accelerators for shotcrete" XP000191084 &
JP-A-02 175 646 (SHOWA DENKO K. K.) 6 July
1990**
• **CHEMICAL ABSTRACTS, vol. 119, no. 6, 9
August 1993 Columbus, Ohio, US; abstract no.
54817r, HIRANO KENKICHI & AL.: "Cement
admixture and rapid setting method thereof"
XP000405018 & JP-A-05 097 491 (DENKI
KAGAKU KOGYO KK.) 20 April 1993**
• **DATABASE WPI Section Ch, Week 8438 Derwent
Publications Ltd., London, GB; Class E33, AN
84-235027 XP002023890 & JP-A-59 141 447
(NIPPON CEMENT KK) , 14 August 1984**

EP 0 769 482 B1

- **CHEMICAL ABSTRACTS, vol. 88, no. 18, 1 May 1978 Columbus, Ohio, US; abstract no. 125464c, YAMAGISHI HIROSHI & AL.: "Cement mortar lining mixtures for metal pipes" XP000596664 & JP-A-52 094 319 (DENKI KAGAKU KOGYO K. K.) 8 August 1977**

- **CHEMICAL ABSTRACTS, vol. 113, no. 6, 6 August 1990 Columbus, Ohio, US; abstract no. 45397c, HIROSE SATORU & AL.: "Friable accelerators for shotcrete" XP000182544 & JP-A-01 294 554 (NIHON CEMENT CO., LTD) 28 November 1989**

**Description**

The present invention relates to a spraying material to be sprayed on a natural ground surface exposed in a tunnel of e.g. a road, a railway or a raceway, and a spraying method employing it. For the purpose of the present invention, cement mortar generally includes paste, mortar and concrete.

Heretofore, to prevent collapse of natural ground exposed by e.g. excavation of a tunnel, a method of spraying quick setting concrete having an accelerating agent blended to concrete, has been applied (Japanese Examined Patent Publication No. 4149/1977).

This method is a method in which spraying concrete is prepared by a plant for measuring and mixing cement, aggregate and water, installed usually at an excavation site, the spraying concrete is transported by an agitator truck, fed under pressure by a concrete pump and mixed in a junction pipe provided at an intermediate position of the pipe line, with an accelerating agent fed under pressure from other supply line, to form quick setting spraying concrete, which is sprayed on the natural ground surface until the thickness reaches a predetermined level.

With this method, the rebound ratio, i.e. a ratio of the amount falling off without attaching to the natural ground to the total amount sprayed, is as high as from 15 to 30 wt%, and dust is substantial, whereby an adverse effect of the bad working environment, such as pneumoconiosis, is feared. Accordingly, a method whereby the rebound ratio and the dust are less, has been desired, but an adequately satisfactory spraying material or spraying method has not yet been available and improvements have been strongly desired. Conventional accelerating agents are composed mainly of calcium aluminate or an alkali metal aluminate and thus are highly alkaline. Accordingly, if the dust or rebound attached to the skin, skin roughening is likely to be caused, and due care has been required (Japanese Examined Patent Publication No. 27457/1981).

Concrete containing a conventional accelerating agent, provides good rising of the initial strength as compared with concrete containing no accelerating agent, but its strength-providing property tends to be poor such that the long term strength is lower by from 30 to 50% than concrete containing no accelerating agent.

Even then, the initial strength is sufficiently high in most cases to prevent collapse of natural ground in a conventional NATM method, and in the case of unstable natural ground, the sprayed thickness has been made thick to attain sufficient strength.

However, from the viewpoint of economy or working efficiency, it is not so desirable to make the sprayed thickness thick. Especially in excavation of a tunnel with a large cross section, it is important to improve the strength of sprayed concrete, to make the sprayed thickness thin and to shorten the application time or the excavation cycle, from the viewpoint of economy and working efficiency.

In order to increase the short time strength by using calcium aluminate as an accelerating agent, the amount of the accelerating agent is usually increased. However, if the accelerating agent is incorporated in an amount exceeding 10 parts by weight per 100 parts by weight of cement, the admixing property of the accelerating agent with concrete tends to be poor, whereby formation of dust tends to increase, or there has been a problem that as the accelerating agent is used in a large amount, it becomes necessary to supplement the accelerating agent during spraying, whereby the working efficiency tends to be poor.

Further, a method of preliminarily incorporating gypsum and calcium aluminate has been proposed as a means to attain high strength after spraying and to reduce the reduction in strength as compared with concrete containing no accelerating agent (Japanese Unexamined Patent Publications No. 16717/1975, No. 16718/1975 and No. 25623/1975).

However, when an accelerating agent comprising calcium aluminate and gypsum, is used, such an accelerating agent is required to be incorporated in an amount of at least 10 wt% to cement, or even at least 20 wt% in a case where high long term strength is required.

At present, to use an accelerating agent, the accelerating agent is transported together with many other materials in a long tunnel, and a man power is required to feed the accelerating agent into an apparatus for adding the accelerating agent. Otherwise, in a wet system spraying method employed to reduce dust, the accelerating agent is fed under pressure with air and continuously mixed with concrete separately fed under pressure.

The conventional accelerating agent is used in an amount of at most 10 plus a few wt%, usually from 5 to 10 wt%, based on cement. Accordingly, even in a case where concrete is used in an amount of a few $m^3$ to a few tens $m^3$ in one spraying operation, if an accelerating agent-adding apparatus is preliminarily fully filled with the accelerating agent, it has been no longer necessary to supplement the accelerating agent during the operation, since a usual accelerating agent-adding apparatus has a capacity of about 150 kg.

However, in a case where the accelerating agent comprising calcium aluminate and gypsum, is used to attain high strength and low reduction in strength, such an accelerating agent is required to be added in an amount of from 10 to 20 wt% to cement. Accordingly, especially for a large cross sectional tunnel requiring a large amount of spraying material to be sprayed, the amount of the accelerating agent required for one operation is very large, and in many cases, the accelerating agent-adding apparatus became empty and it became necessary to stop the spraying operation and to supplement the accelerating agent, or if the accelerating agent ran out during the operation, there was a danger of falling off of the concrete.

Thus, there were serious problems from the viewpoint of safety and working efficiency in adding a large amount of the accelerating agent at the site of a tunnel where spraying has to be done as quickly as possible to prevent collapse of natural ground after excavation.

Accordingly, it has been strongly desired to reduce the amount of the accelerating agent for spraying to be added at site.

Further, if the accelerating agent is added in a large amount, its admixing property with concrete tends to be poor, whereby the strength tends to partially vary, such tends to cause falling off, and there will be an additional problem such that dust will increase. Also from these points, high strength spray application has been practically impossible unless the amount of the accelerating agent to be mixed at the time of the spraying operation, is reduced.

Further, in the accelerating agent having calcium aluminate and gypsum mixed to each other, the surface of calcium aluminate mixed with gypsum is believed to react with the water content, moisture in air or free $SO_3$ in gypsum, whereby, although the mechanism is not clearly understood, there has been a problem that a setting time at the initial setting and the final setting in the spraying operation tends to be prolonged as the number of days increases after mixing calcium aluminate with gypsum.

If the setting time of spraying material is prolonged, there will be problems such that the sprayed concrete at the ceiling portion of the tunnel is likely to fall off, the spraying material can hardly be attached when spring water exists, and the rebound ratio increases, whereby safe, constant, high strength spray application is impossible.

Thus, large scale large capacity spraying has been impossible for high strength spraying, and the installation cost for the accelerating agent-adding apparatus has been very high.

The present inventors have conducted various studies on the problems involved in imparting high strength to sprayed concrete and as a result, have found it possible to solve such problems by carrying out spraying by means of a certain specific spraying material. The present invention has been accomplished on the basis of this discovery.

That is, the present invention provides a spraying material which comprises cement mortar comprising cement and 35 to 60 parts by weight of water per 100 parts by weight of cement and an accelerating agent comprising calcium aluminate; the spraying material, wherein the accelerating agent comprises calcium aluminate, and an alkali metal aluminate and/or an alkali metal carbonate, as main components; the spraying material, wherein the cement mortar further contains a phosphate; the spraying material, which further contains one or more admixtures selected from the group consisting of amines, dust-reducing agents, fiber materials, sulfites, water reducing agents, setting retarders, setting accelerators and ultrafine powders; and a spraying method which comprises using such spraying material.

JP-A-63 075 085 and JP-A-5 097 491 disclose quick setting grouts. US-A-4 390 371 discloses a method for mixing and spraying cementitious materials.

FR-A-2 233 295 discloses a process for the preparation of a quick setting concrete.

Now, the present invention will be described in detail.

Cement to be used in the present invention may, for example, be various Portland cements such as normal, high early strength, moderate heat and ultra-high early strength Portland cements, various mixed cements having blast furnace slag or fly ash mixed to such Portland cements, fine powder cements and cements containing fluoro-calcium aluminate (hereinafter referred to simply as fluoro-cements). Any cement may be used to obtain good initial and long term strength. However, fine powder cement is preferred, since further improvement in strength can thereby be expected.

Fine powder cement to be used in the present invention is the one having a Blaine specific surface area larger than 3,200 cm$^2$/g of usual cement, and the larger the Blaine specific surface area, the better, since the reaction activities are strong. However, taking into consideration the pulverization ability and the classification ability suitable for the working efficiency and economy, the Blaine specific surface area is preferably at least 4,500 cm$^2$/g, more preferably from 5,000 to 8,000 cm$^2$/g. If it is less than 4,500 cm$^2$/g, the strength may not be improved in some cases. Cement to be finely pulverized may be one of those mentioned above.

The method for preparing the fine powder cement is not particularly limited and may be a method of obtaining fine powder only by pulverization, a method of obtaining fine powder only by classification, or a method of obtaining fine powder by a combination of pulverization and classification. A most suitable method may be selected for use taking the economical aspect and the working efficiency into consideration. For example, a method may be mentioned in which cement clinker obtained by calcination in a kiln in a conventional cement production plant, is pulverized by e.g. a ball mill, and the obtained cement powder is classified by a classifier to obtain fine powder cement.

Fluoro-cement to be used in the present invention is the one having fluoro-calcium aluminate added and mixed to the above cement.

Further, it is possible to employ a cement obtained by adding a fluorine-containing material such as fluorite in addition to cement materials at the time of preparing cement, followed by calcination in a kiln.

Fluoro-calcium aluminate is a calcium aluminate containing fluorine, and it may, for example, be a pulverized product of a heat-treated product prepared by substituting $CaF_2$ for at least one CaO of calcium aluminate of the formula

$C_3A$, $C_{12}A_7$, CA or $CA_2$ wherein C is CaO and A is $Al_2O_3$. It is also possible to use a calcium aluminate containing fluorine of the formula $C_3A \cdot SO_3 \cdot CaF_2$ having $CaF_2$ substituted for one CaO of $C_4A_3 \cdot SO_3$.

With a view to attaining the strength-providing property, it is preferred to use $C_{11}A_7 \cdot CaF_2$ having $CaF_2$ substituted for one CaO of $C_{12}A_7$, or a calcium aluminate containing fluorine of the formula $C_3A_3 \cdot SO_3 \cdot CaF_2$ having $CaF_2$ substituted for one CaO of $C_4A_3 \cdot SO_3$.

As a fluorine-containing mineral component, fluoro-calcium aluminate in fluoro-cement is preferably in an amount of from 5 to 100 parts by weight, more preferably from 10 to 60 parts by weight, per 100 parts by weight of the cement. If it is less than 5 parts by weight, the effects of fluoro-cement can not adequately be obtained, and if it exceeds 100 parts by weight, the strength-providing property tends to be impaired.

Gypsum to be used in the present invention, is incorporated to cement for the purpose of imparting high strength to sprayed concrete. The gypsum includes anhydrous gypsum, hemihydrate gypsum and gypsum dihydrate, and one or more of them may be used. Among them, it is preferred to use anhydrous gypsum with a view to attaining the strength-providing property.

The particle size of gypsum may be at a level commonly used for usual cement, for example, at a level with a Blaine specific surface are exceeding 3,000 $cm^2/g$, and the finer the better.

Gypsum is used preferably in an amount of from 1 to 25 parts by weight, more preferably from 5 to 20 parts by weight, per 100 parts by weight of cement. However, when fluoro-cement is used, the amount of gypsum is preferably from 1 to 25 parts by weight, more preferably from 5 to 20 parts by weight, per 100 parts by weight of cement in the fluoro-cement. If it is less than 1 part by weight, it tends to be difficult to promote the long term strength-providing property, and if it exceeds 25 parts by weight, the initial setting tends to be delayed, the adhesion to natural ground tends to be low, or concrete tends to expand for a long period of time, whereby the concrete is likely to break.

Further, in the present invention, in order to improve the long term strength, gypsum may be added to the accelerating agent. In such a case, by using cement mortar comprising cement and gypsum, the amount of the accelerating agent comprising calcium aluminate and gypsum, can be reduced.

The amount of gypsum to be added to the accelerating agent is preferably from 10 to 200 parts by weight, more preferably from 50 to 150 parts by weight, per 100 parts by weight of calcium aluminate. If the amount is less than 10 parts by weight, no adequate effect tends to be obtained, and if it exceeds 200 parts by weight, the accelerating property tends to be low. When cement mortar and the accelerating agent are mixed, the total amount of gypsum is preferably from 1 to 25 parts by weight per 100 parts by weight of cement. If the total amount is less than 1 part by weight, no adequate strength-providing effects can be expected, and if it exceeds 25 parts by weight, concrete is likely to expand and break.

The accelerating agent to be used in the present invention comprises calcium aluminate as a main component.

The calcium aluminate to be used in the present invention is the one obtainable by subjecting a mixture of CaO material, $Al_2O_3$ material, etc. to heat treatment such as calcination in a kiln or melting in an electric furnace, and it is an accelerating component which induces setting of concrete at an initial stage.

The mineral component of the calcium aluminate may, for example, be a pulverized product of a heat treated product of calcium aluminate represented by the formula $C_3A$, $C_{12}A_7$, CA or $CA_2$ wherein C is CaO and A is $Al_2O_3$. Further, other mineral components may, for example, be calcium aluminosilicate containing $SiO_2$, $C_{11}A_7 \cdot CaX_2$ (wherein X is halogen such as fluorine) having a halide such as $CaF_2$ substituted for one CaO of $C_{12}A_7$, $C_4A_3 \cdot SO_3$ containing a $SO_3$ component, alumina cement, and calcium aluminate having an alkali metal such as sodium, potassium or lithium partially solid-solubilized therein. Among them, amorphous calcium aluminate obtained by quenching a heat treated product corresponding to $C_{12}A_7$, is preferred from the viewpoint of the reaction activities.

The particle size of calcium aluminate is preferably at a level with a Blaine value of at least 3,000 $cm^2/g$, more preferably at least 4,000 $cm^2/g$, from the viewpoint of the accelerating property and the initial strength-providing property. If the Blaine value is less than 3,000 $cm^2/g$, the accelerating property or the initial strength-providing property tends to be low.

Calcium aluminate is used preferably in an amount of from 1 to 20 parts by weight, more preferably from 5 to 15 parts by weight, per 100 parts by weight of cement.

If the amount is less than 1 part by weight, the initial setting tends to be difficult, and if it exceeds 20 parts by weight, the long term strength-providing property tends to be impaired.

In the present invention, for the purpose of improving the initial setting or the initial strength, it is possible to incorporate an alkali metal aluminate or an alkali metal carbonate to calcium aluminate as an accelerating agent.

The alkali metal aluminate to be used in the present invention is the one which promotes the initial setting. The alkali metal aluminate may, for example, be lithium aluminate, sodium aluminate and potassium aluminate, and one or more of these aluminates may be used.

The alkali metal aluminate is used preferably in an amount of from 1 to 50 parts by weight, more preferably from 2 to 25 parts by weight, per 100 parts by weight of calcium aluminate. If it is less than 1 part by weight, no adequate effects tend to be obtained, and if it exceeds 50 parts by weight, the long term strength-providing property tends to be impaired.

The alkali metal carbonate to be used in the present invention is the one which improves the initial strength. The alkali metal carbonate may, for example, be sodium carbonate, potassium carbonate or sodium bicarbonate, and one or more of these alkali metal carbonates may be used. When the alkali metal carbonate is used in combination with the alkali metal aluminate, the quick-setting force will be more improved.

The alkali metal carbonate is used preferably in an amount of from 0.5 to 200 parts by weight, more preferably from 1 to 50 parts by weight, per 100 parts by weight of calcium aluminate. If it is less than 0.5 part by weight, no adequate effects tend to be obtained, and if it exceeds 200 parts by weight, the long term strength tends to be low.

The amount of the accelerating agent to be used, is not particularly limited, but it is preferably from 1 to 20 parts by weight, more preferably from 5 to 15 parts by weight, per 100 parts by weight of cement. If it is less than 1 part by weight, the initial setting tends to be difficult, and if it exceeds 20 parts by weight, the long term strength-providing property tends to be impaired.

In the present invention, it is further possible to incorporate one or more admixtures selected from the group consisting of phosphates, amines, dust-reducing agents, fiber materials, sulfites, water-reducing agents, setting retarders, setting accelerators and ultrafine powders.

The phosphates to be used in the present invention are those which improve the force-feeding property of spraying concrete. Particularly by adding the phosphates, when spraying concrete is left in a kneaded state, even if the amount of water used is small, the fluidity of the spraying concrete can thereby maintained for a relatively long period of time.

The phosphates are a kind of setting retarders.
However, as distinguished from setting retarders such as organic acids or alkali metal carbonates, substantial retarding effects can be obtained with a small amount, so that adequate fluidity can be secured even with a small amount of water used. In a case where organic acids or alkali metal carbonates are used, if the amount of water used, is small, a large amount of such retarders is required to impart adequate fluidity to concrete, and consequently, even if an accelerator is added in a large amount, the strength-providing property tends to be poor. Whereas, phosphates give no substantial adverse effect to the strength-providing property after addition of the accelerating agent.

The phosphates include, for example, sodium salts and potassium salts of phosphoric acid, pyrophosphoric acid, trimethaphosphoric acid, hexamethaphosphoric acid, tripolyphosphoric acid and tetrapolyphosphoric acid. For example, sodium primary phosphate, sodium secondary phosphate, sodium tertiary phosphate, potassium primary phosphate, potassium secondary phosphate, potassium tertiary phosphate, sodium pyrophosphate, potassium pyrophosphate, sodium trimethaphosphate, potassium trimethaphosphate, sodium hexamethaphosphate, potassium hexamethaphosphate, sodium tripolyphosphate, potassium tripolyphosphate, sodium tetrapolyphosphate and potassium tetrapolyphosphate may be mentioned. One or more of these phosphates may be used. Among them, it is preferred to use sodium primary phosphate or sodium tripolyphosphate from the viewpoint of the strength-providing property.

The particle size of the phosphate is not particularly limited, but is preferably at most 0.3 mm from the viewpoint of solubility.

Further, the phosphates may be used in combination with organic acids or alkali metal carbonates which will be described hereinafter.

The phosphate is used preferably in an amount of from 0.05 to 5 parts by weight, more preferably from 0.2 t 3 parts by weight, per 100 parts by weight of cement. If the amount is 0.05 part by weight, no adequate fluidity tends to be obtained, and if it exceeds 5 parts by weight, the strength-providing property tends to be impaired.

The amines to be used in the present invention, are added for the purpose increasing the adhesive force of the quick-setting spraying concrete to natural ground while maintaining the inherent setting force, thereby to reduce the amount of rebound and to improve the strength-providing effects by an addition of the accelerating agent.

When the amines are used in combination with the accelerating agent or the setting accelerator, it is possible to improve the adhesion of concrete while maintaining the inherent setting force thereof. Further, the amines are capable of imparting the effects of reducing the tendency that the long term strength-providing property tends to be poor when a large amount of the accelerating agent is incorporated.

Such amines include, for example, trimethylamine, diethylamine, triethylamine, propylamine, allylamine, cyclohexylamine, cyclobutylamine, monoethanol amine, diethanol amine, triethanol amine, hexamethylene diamine, pyridine and aniline. One or more such amines can be used. Among them, it is preferred to employ monoethanol amine or triethanol amine which has excellent affinity with water or with an alkaline material such a cement.

The amine is used preferably in an amount of from 0.5 to 10 parts by weight, more preferably from 1 to 5 parts by weight, per 100 parts by weight of the cement. If the amount is less than 0.5 part by weight, the setting force, the adhesion and the strength-providing property at the time of adding the accelerating agent, tends to be impaired, and if it exceeds 10 parts by weight, the strength-providing property tends to be impaired.

The dust-reducing agents to be used in the present invention provide effects for reducing rebound of sprayed concrete or reducing scattering into air of the accelerating agent or the cement component which has not been well kneaded during the spraying operation.

Such dust-reducing agents include, for example, cellulose ethers such as methyl cellulose, ethyl cellulose, hydroxyethyl cellulose, hydroxypropyl cellulose, hydroxyethylmethyl cellulose, hydroxypropylmethyl cellulose and hydroethylethyl cellulose, natural polymer compounds such as arginic acid, sodium arginate and casein, vinyl polymers or copolymers of e.g. vinyl acetate, ethylene, vinyl chloride, methacrylic acid, acrylic acid, sodium acrylate and unsaturated carboxylic acids, and emulsions of a product obtained by saponifying a vinyl acetate polymer or its copolymer to have a polyvinyl alcohol backbone structure. One or more of such dust-reducing agents can be used. Among them, cellulose ethers are preferred, since they are less likely to impair the initial setting.

The dust-reducing agent is used preferably in an amount of from 0.01 to 1 part by weight, more preferably from 0.05 to 0.5 part by weight, per 100 parts by weight of cement. If the amount is less than 0.01 part by weight, no adequate effects for preventing formation of dusts tends to be obtained, and if it exceeds 1 part by weight, the strength-providing property of sprayed concrete tends to be impaired.

The fiber materials to be used in the present invention may be inorganic or organic, and they provide effects for improving impact resistance or elasticity of sprayed concrete.

The length of the fiber materials is preferably at most 50 mm, more preferably from 0.5 to 30 mm, in view of the force-feeding property or the mixing property. If the length exceeds 50 mm, spraying concrete is likely to cause clogging during force-feeding.

Inorganic fiber materials include, for example, glass fibers, carbon fibers, rock wool, asbestos, ceramic fibers and metal fibers, and organic fiber materials include, for example, vinylon fibers, polyethylene fibers, polypropylene fibers, polyacrylic fibers, cellulose.fibers, polyvinyl alcohol fibers, polyamide fibers, pulps, hemp, excelsior and wood chips. One or more of such fiber materials may be used. Among them, it is preferred to employ metal fibers or vinylon fibers from the economical viewpoint.

The fiber materials are used preferably in an amount of from 0.5 to 7 parts by weight, more preferably from 1 to 5 parts by weight, per 100 parts by weight of cement. If the amount is less than 0.5 part by weight, no adequate effects tend to be obtained, and if it exceeds 7 parts by weight, the fluidity tends to be low.

Sulfites to be used in the present invention are effective to prevent a decrease with time of slump of spraying concrete and thus to increase the strength of concrete. Such sulfites include sulfites such as sodium sulfite, potassium sulfite and calcium sulfite, bisulfites such as sodium bisulfite and potassium bisulfite, and pyrosulfites such as sodium pyrosulfite and potassium pyrosulfite. One or more of such sulfites may be used. Among them, it is preferred to employ sodium sulfite or potassium sulfite from the viewpoint of the strength-providing property.

The sulfite is used preferably in an amount of from 0.05 to 2 parts by weight, more preferably from 0.07 to 1 part by weight, per 100 part by weight of cement. If the amount is less than 0.05 part by weight, it tends to be difficult to prevent the slump decrease with time or to expect an increase in strength. If it exceeds 2 parts by weight, the retarding properties tend to be so large that the strength-providing property tends to be impaired.

The water-reducing agent is used to improve the fluidity of cement mortar, and it may be used in a liquid form or a powder form. The water-reducing agent may, for example, be a polyol derivative, a lignin sulfonate or its derivative, or a high performance water-reducing agent. One or more of such water-reducing agents may be used. Among them, it is preferred to use a high performance water-reducing agent since it is thereby possible to impart a high strength-providing property.

By using the high performance water-reducing agent, the sprayed thickness can be reduced, the quick setting force can be improved, the amount of the accelerating agent or the amount of formation of dust can be reduced, the rebound ratio can be minimized, and the sprayed amount can efficiently be improved.

The high performance water-reducing agent may, for example, be a formalin condensate of an alkyl allyl sulfonate, a naphthalene sulfonate or a melamine sulfonate, or a polycarboxylic acid type polymer compound. One or more of such high performance water-reducing agents may be used, and the agent may be in a liquid form or a powder form. Among them, it is preferred to use a formalin condensate of a naphthalene sulfonate or a combination of a formalin condensate of a naphthalene sulfonate and a formalin condensate of a melamine sulfonate.

The high performance water-reducing agent is used preferably in an amount of from 0.05 to 3 parts by weight, more preferably from 0.1 to 2 parts by weight, per 100 parts by weight of cement as solid content. If the amount is less than 0.05 part by weight, no adequate effects will be obtained, and if it exceeds 3 parts by weight, the viscosity of cement mortar tends to be so high that the application efficiency tends to be low.

Further, to adjust the setting time of cement mortar, a setting retarder such as an organic acid or an alkali metal salt, or a setting accelerator such as an alkali metal hydroxide such as sodium hydroxide, slaked lime, or a sulfate such as alum, may be incorporated.

The setting retarder is an agent which delays the setting time of cement mortar. The organic acid, may for example, be gluconic acid, tartaric acid, citric acid, maleic acid or lactic acid, or a sodium salt or a potassium salt thereof.

The organic acid is used preferably in an amount of from 0.01 to 3 parts by weight, more preferably from 0.05 to 2 parts by weight, per 100 parts by weight of cement. If it is less than 0.01 part by weight, no adequate effects tend to be obtained, and if it exceeds 3 parts by weight, the setting tends to be so delayed that the setting tends to be poor.

The alkali metal carbonate is used preferably in an amount of from 0.01 to 10 parts by weight, more preferably from 0.1 to 5 parts by weight, per 100 parts by weight of cement. If the amount is less than 0.01 part by weight, no adequate effects tend to be obtained, and if it exceeds 10 parts by weight, the setting tends to be so delayed that the setting will be poor.

To increase the setting retarding property, it is preferred to use a setting retarder employing an organic acid and an alkali metal carbonate in combination. In such a case, the amount of the alkali metal carbonate is preferably from 10 to 1,000 parts by weight, more preferably from 50 to 700 parts by weight, per 100 parts by weight of the organic acid. If the amount is less than 10 parts by weight, no adequate effects tend to be obtained, and if it exceeds 1,000 parts by weight, the setting tends to be so delayed that the setting will be poor.

The amount of the setting retarder employing the organic acid and the alkali metal carbonate in combination, is preferably from 0.01 to 10 parts by weight, more preferably from 0.1 to 5 parts by weight, per 100 parts by weight of cement. If the amount is less than 0.01 part by weight, no adequate effects will be obtained, and if it exceeds 10 parts by weight, the setting tends to be so delayed that the setting will be poor.

The setting accelerator is an agent which accelerates the initial setting. The setting accelerator may, for example, an alkali metal hydroxide such as sodium hydroxide, slaked lime or a sulfate such as alum. One or more of such setting accelerators may be employed.

The setting accelerator is used preferably in an amount of from 0.05 to 20 parts by weight, more preferably from 0.1 to 10 parts by weight, per 100 parts by weight of cement. If the amount is less than 0.05 part by weight, no adequate effects will be obtained, and if it exceeds 20 parts by weight, the long term strength-providing property may not be improved.

The ultrafine powder to be used in the present invention is a powder having an average particle size of at most 10 μm, and it is effective for reducing the amount of cement, reducing dust and improving the force-feeding property of concrete. Such ultrafine powder may, for example, be fine powder slag, fly ash, bentonite, kaolin or silica fume. One or more of such ultrafine powders may be employed. Among them, it is preferred to use silica fume from the viewpoint of the strength-providing property.

The ultrafine powder is used preferably in an amount of from 1 to 100 parts by weight, more preferably from 2 to 30 parts by weight, per 100 parts by weight of cement. If the amount is less than 1 part by weight, no adequate effects will be obtained, and if it exceeds 100 parts by weight, the setting or curing tends to be delayed.

Water is used in an amount of from 35 to 60 parts by weight, more preferably from 40 to 50 parts by weight, per 100 parts by weight of cement. If the amount is less than 35 parts by weight, no adequate mixing can be done, and if it exceeds 60 parts by weight, no adequate strength tends to be obtained, and a large amount of the accelerating agent tends to be required.

The aggregate such as coarse aggregate or fine aggregate to be used in the present invention is preferably the one having low water absorptivity and high aggregate strength, but it is not particularly limited.

The coarse aggregate is preferably the one having a maximum diameter of at most 20 mm, and it is more preferably the one having a maximum diameter of from 6 to 15 mm, taking into consideration the force-feeding property by a pump.

The fine aggregate is preferably the one having a maximum diameter of at most 5 mm, and it may, for example, be river sand, mountain sand, lime sand or silica sand.

In the present invention, a method for mixing various materials is not particularly limited so long as cement and gypsum, and if necessary, a phosphate, are mixed prior to mixing with the accelerating agent. The phosphate is added to cement mortar, since it is effective for improving fluidity of spraying concrete.

The mixing method may, for example, be a method wherein a certain specific amount of gypsum is preliminarily added to cement, or a method in which gypsum is added at the time of kneading concrete. Further, the content of sulfur trioxide ($SO_3$) in cement as stipulated in JIS is from 3.0 to 4.5 wt%, and there may be mentioned a method wherein gypsum is mixed in an amount exceeding this value stipulated in JIS at the time of preparation of cement in a cement production plant.

According to the spraying method of the present invention, the spraying operation can be carried out with dry cement mortar containing cement, cement mortar containing cement and water, or a paste or concrete thereof from the viewpoint of the required physical property, economy and operation efficiency, and either a dry spraying method or a wet spraying method may be used.

The drying spraying method may, for example, be a method wherein cement, gypsum, if necessary, aggregate and an accelerating agent are mixed and fed under pressure with air, and water is added at an intermediate position, for example, from one way of a Y type pipe, whereupon the mixture is sprayed in a wet state, or a method wherein cement and if necessary aggregate are mixed and fed under pressure with air, and at an intermediate position, gypsum, an accelerating agent and water are added in this order, whereupon the spraying material is sprayed in a wet state.

The wet spraying method may, for example, be a method wherein cement, gypsum, if necessary aggregate and water are mixed, kneaded and fed under pressure with air, and at an intermediate position, an accelerating agent is added, for example, from one way of a Y type pipe, whereupon the mixture is sprayed. Further, in the wet system spraying method, water is added to cement mortar.

An amine, a dust-reducing agent, a fiber material, a sulfite, a water-reducing agent, a setting retarder, a setting accelerator and an ultrafine powder may be mixed to either cement mortar or an accelerator, and they may be incorporated to either one or both of cement mortar and an accelerator. However, with a view to improving the strength, preventing rebound and controlling setting, it is preferred to add them to cement mortar. The mixing method is not particularly limited so long as a quick-setting spraying concrete having these materials finally mixed, is sprayed.

For the spraying method of the present invention, a conventional spraying equipment can be used. Usually, the spraying pressure is from 2 to 5 kg/cm$^2$, and the spraying rate is from 4 to 20 m$^3$/hr.

The spraying equipments are not particularly limited so long as spraying can sufficiently be carried out. For example, for force-feeding of concrete, "Ariber 280", tradename, manufactured by Ariber Company, may, for example, be used, and for force-feeding of an accelerator, an accelerator force-feeding apparatus "Natomucreet" may, for example, be used.

In a preferred case where cement mortar, an accelerating agent and gypsum are separately fed under pressure, any method may be employed without any particular limitation so long as it is a method whereby cement mortar, an accelerating agent and gypsum are separately fed under pressure and joined and mixed to one another.

For example, there may be mentioned a method wherein cement mortar is fed under pressure by a concrete pump, and at intermediate positions, two Y type pipes are connected, whereby an accelerating agent is fed from one pipe, and gypsum is fed under pressure from the other pipe, to mix them with cement mortar, or a method wherein cement mortar having no water incorporated, is fed under pressure, and at intermediate positions, three Y type pipes are connected, and whereby an accelerating agent is supplied from one pipe, gypsum is supplied from another pipe, and water is supplied from still another pipe, and they are joined and mixed.

Water to be used in the spraying method wherein cement mortar, an accelerating agent and gypsum are fed under pressure separately, may be mixed to cement mortar, gypsum, or an accelerator, via a single route of its own, or by a combination thereof, so long as the amount of water to the amount of cement is suitable finally for quick-setting spraying concrete under a force-feedable condition.

The spraying method for feeding cement mortar, an accelerator and gypsum separately under pressure, is not particularly limited. However, in the case of a dry spraying method, a method is practically useful wherein cement, fine aggregate and coarse aggregate are mixed and fed under pressure, and at intermediate positions, three Y type pipes are, for example, connected, whereby an accelerator is added from one pipe, gypsum is added from another pipe, and water is added from still another pipe, and the resulting mixture is sprayed under a wet state. In the dry spraying method, dust is likely to form, and a dust-reducing agent may preliminarily be incorporated.

Further, in a wet system spraying method, it is possible to employ a method wherein cement, fine aggregate, coarse aggregate and water are added, kneaded and fed under pressure, and at intermediate positions, two Y type pipes are, for example, connected, whereby an accelerating agent is added from one pipe, and gypsum is added from another pipe, and the mixture is sprayed.

The spraying conditions in the case of feeding cement mortar, an accelerator and gypsum separately under pressure, are not particularly limited. However, it is preferred to feed cement mortar, gypsum and an accelerating agent under substantially the same pressure, in view of the mixing efficiency.

Now, the present invention will be described in further detail with reference to Examples. However, it should be understood that the present invention is by no means restricted to such specific Examples.

EXAMPLE 1

Using unit amounts of materials being 400 kg/m$^3$ of cement, 1055 kg/m$^3$ of fine aggregate, 713 kg/m$^3$ of coarse aggregate and 200 kg/m$^3$ of water, gypsum was mixed in an amount as identified in Table 1 per 100 parts by weight of cement a to obtain spraying concrete.

By means of a spraying machine "Ariber 280", this spraying concrete was fed under pressure, and from one way of a Y type pipe provided at an intermediate position, an accelerating agent made of calcium aluminate was mixed thereto in an amount as identified in Table 1 per 100 parts by weight of cement, by an accelerating agent-adding machine "Denkanatomucreet" to obtain quick setting spraying concrete.

This quick setting spraying concrete was sprayed to a formwork at a rate of 4 m$^3$/hr, whereupon the compression strength at each age was measured. The results are shown in Table 1.

Materials used

Cement a: Commercially available normal Portland cement, Blaine specific surface area: 3200 $cm^2/g$, specific gravity: 3.16
Gypsum: Commercially available anhydrous gypsum, Blaine specific surface area: 5400 $cm^2/g$,
Fine aggregate: sand, river sand produced in Himekawa, Niigata-ken, Japan, surface water content: 5%, specific gravity: 2.61
Coarse aggregate: Gravel, crushed stone, maximum diameter: at most 15 mm, dried surface condition, specific gravity: 2.65
Water: City water, 20°C
Calcium aluminate: Amorphous material obtained by quenching a heat treated product corresponding to a composition of $C_{12}A_7$, Blaine specific surface area: 5,900 $cm^2/g$, specific gravity: 2.90

Measuring method

Compression strength: The obtained spraying concrete was sprayed to a pull-out formwork of 25 cm in width $\times$ 25 cm in length and to a formwork of 50 cm in width $\times$ 50 cm in length $\times$ 20 cm in thickness.

For an age of three hours or less, a pull-out formwork specimen was used for the measurement. A pin was covered with the quick setting spraying concrete from the surface of the pull-out formwork, and the pin was pulled out from the rear side of the formwork, whereby the pull-out strength was measured, and the compression strength was calculated by the following formula:

$$\text{Compression strength} = \text{pull-out strength} \times 4/\text{surface area of the specimen}$$

For an age of one day or more, a specimen of 5 cm in diameter $\times$ 10 cm in length sampled from the formwork of 50 cm in width $\times$ 50 cm in length $\times$ 20 cm in thickness, was subjected to a measurement by a 20 ton pressure tester to obtain the compression strength.

Table 1

| Test No. | Gypsum | Accelerating agent | Compression strength (N/mm$^2$) | | | | | Note |
|---|---|---|---|---|---|---|---|---|
| | | | 1h | 3h | 1d | 7d | 28d | |
| 1-1 | 0 | 0 | 0.0 | 0.0 | - | 18.5 | 41.3 | Comparative |
| 1-2 | 1 | 0 | 0.0 | 0.0 | - | 18.5 | 41.4 | Comparative |
| 1-3 | 5 | 0 | 0.0 | 0.0 | - | 18.5 | 42.2 | Comparative |
| 1-4 | 10 | 0 | 0.0 | 0.0 | - | 18.7 | 44.6 | Comparative |
| 1-5 | 15 | 0 | 0.0 | 0.0 | - | 18.8 | 45.3 | Comparative |
| 1-6 | 25 | 0 | 0.0 | 0.0 | - | 18.8 | 46.8 | Comparative |
| 1-7 | 0 | 2 | 0.0 | 0.0 | - | 18.6 | 38.4 | Comparative |
| 1-8 | 1 | 2 | 0.1 | 0.6 | - | 19.7 | 41.9 | Invention |
| 1-9 | 5 | 2 | 0.3 | 0.7 | - | 22.3 | 43.6 | Invention |
| 1-10 | 10 | 2 | 0.4 | 0.8 | - | 23.0 | 45.7 | Invention |
| 1-11 | 15 | 2 | 0.4 | 0.8 | - | 23.3 | 46.6 | Invention |
| 1-12 | 25 | 2 | 0.5 | 0.8 | - | 23.5 | 47.8 | Invention |
| 1-13 | 0 | 5 | 0.2 | 0.5 | 8.9 | 19.3 | 36.2 | Comparative |
| 1-14 | 1 | 5 | 0.5 | 1.0 | 10.3 | 20.6 | 42.3 | Invention |
| 1-15 | 5 | 5 | 1.2 | 2.4 | 13.6 | 28.3 | 47.8 | Invention |
| 1-16 | 10 | 5 | 1.7 | 4.3 | 14.2 | 31.7 | 49.5 | Invention |
| 1-17 | 15 | 5 | 2.0 | 4.7 | 14.5 | 33.9 | 53.1 | Invention |
| 1-18 | 25 | 5 | 2.2 | 5.0 | 15.0 | 34.2 | 54.9 | Invention |

Table 1   (continued)

| Test No. | Gypsum | Accelerating agent | Compression strength (N/mm$^2$) | | | | | Note |
|---|---|---|---|---|---|---|---|---|
| | | | 1h | 3h | 1d | 7d | 28d | |
| 1-19 | 0 | 10 | 1.2 | 1.7 | 10.0 | 20.5 | 33.6 | Comparative |
| 1-20 | 1 | 10 | 1.8 | 2.0 | 12.2 | 22.3 | 42.6 | Invention |
| 1-21 | 5 | 10 | 2.1 | 3.6 | 15.3 | 29.5 | 46.8 | Invention |
| 1-22 | 10 | 10 | 3.0 | 6.0 | 16.0 | 32.6 | 53.0 | Invention |
| 1-23 | 15 | 10 | 3.4 | 6.6 | 17.5 | 38.4 | 55.0 | Invention |
| 1-24 | 25 | 10 | 3.6 | 6.9 | 17.9 | 39.2 | 56.3 | Invention |
| 1-25 | 0 | 20 | 1.9 | 2.5 | 11.3 | 22.7 | 32.2 | Comparative |
| 1-26 | 1 | 20 | 2.3 | 3.1 | 16.2 | 28.6 | 43.1 | Invention |
| 1-27 | 5 | 20 | 3.2 | 5.2 | 19.5 | 34.7 | 56.4 | Invention |
| 1-28 | 10 | 20 | 4.3 | 6.6 | 20.6 | 40.4 | 57.7 | Invention |
| 1-29 | 15 | 20 | 5.7 | 8.3 | 23.3 | 42.7 | 58.9 | Invention |
| 1-30 | 25 | 20 | 7.2 | 10.3 | 22.1 | 41.8 | 53.0 | Invention |

• "h" means "hour(s)", and "d" means "day(s)".
• "Gypsum" and "Accelerating agent" are represented by parts by weight per 100 parts by weight of cement.
• Symbol "-" for "Compression strength" means that sampling of a specimen was impossible due to inadequate strength.

EXAMPLE 2

The test was carried out in the same manner as in Example 1 except that 100 parts by weight of cement as identified in Table 2 and gypsum in an amount was identified in Table 2, were mixed to obtain spraying concrete, and an accelerating agent made of calcium aluminate was used in an amount as identified in Table 2 per 100 parts by weight of cement, to obtain quick setting spraying concrete.
However, fine powder cement used, was the one obtained by pulverizing normal Portland cement by a ball mill, followed by classification by a classifier.

Materials used

Cement b: Fine powder cement, pulverized product of commercially available normal Portland cement, Blaine specific surface area: 4,500 cm$^2$/g, specific gravity: 3.16
Cement c: Fine powder cement, pulverized product of commercially available normal Portland cement, Blaine specific surface area: 5,300 cm$^2$/g, specific gravity: 3.16

Table 2

| Test No. | Cement | Gypsum | Accelerating agent | Compression strength (N/mm$^2$) | | | | | Note |
|---|---|---|---|---|---|---|---|---|---|
| | | | | 1h | 3h | 1d | 7d | 28d | |
| 2-1 | a | 10 | 0 | 0.0 | 0.0 | - | 18.7 | 44.6 | Comparative |
| 2-2 | b | 10 | 0 | 0.0 | 0.0 | - | 19.5 | 46.8 | Comparative |
| 2-3 | b | 0 | 5 | 0.2 | 0.6 | 9.5 | 22.0 | 39.1 | Comparative |
| 2-4 | b | 10 | 5 | 1.8 | 4.8 | 14.7 | 32.2 | 52.0 | Invention |
| 2-5 | b | 25 | 5 | 2.5 | 5.9 | 17.3 | 34.6 | 57.2 | Invention |
| 2-6 | b | 0 | 10 | 1.5 | 1.9 | 10.5 | 22.3 | 39.2 | Comparative |
| 2-7 | b | 10 | 10 | 3.3 | 6.4 | 17.2 | 34.0 | 56.2 | Invention |
| 2-8 | b | 25 | 10 | 4.1 | 7.7 | 18.9 | 41.0 | 59.5 | Invention |

Table 2   (continued)

| Test No. | Cement | Gypsum | Accelerating agent | Compression strength (N/mm$^2$) | | | | | Note |
|---|---|---|---|---|---|---|---|---|---|
| | | | | 1h | 3h | 1d | 7d | 28d | |
| 2-9 | b | 0 | 20 | 1.9 | 2.7 | 12.1 | 23.0 | 35.2 | Comparative |
| 2-10 | b | 10 | 20 | 4.5 | 7.1 | 21.2 | 42.0 | 58.8 | Invention |
| 2-11 | b | 25 | 20 | 8.0 | 11.7 | 23.6 | 44.3 | 56.1 | Invention |
| 2-12 | c | 10 | 0 | 0.0 | 0.0 | - | 20.5 | 48.6 | Comparative |
| 2-13 | c | 0 | 5 | 0.4 | 0.8 | 10.1 | 23.7 | 41.6 | Comparative |
| 2-14 | c | 10 | 5 | 2.0 | 5.6 | 16.3 | 33.8 | 54.7 | Invention |
| 2-15 | c | 25 | 5 | 3.0 | 6.8 | 18.0 | 37.2 | 59.4 | Invention |
| 2-16 | c | 0 | 10 | 1.7 | 2.1 | 11.5 | 23.3 | 40.3 | Comparative |
| 2-17 | c | 10 | 10 | 4.2 | 7.5 | 18.7 | 35.7 | 58.6 | Invention |
| 2-18 | c | 25 | 10 | 4.6 | 8.9 | 19.6 | 42.3 | 63.7 | Invention |
| 2-19 | c | 0 | 20 | 2.3 | 3.0 | 13.0 | 24.4 | 35.6 | Comparative |
| 2-20 | c | 10 | 20 | 5.1 | 8.8 | 23.5 | 44.1 | 61.5 | Invention |
| 2-21 | c | 25 | 20 | 9.0 | 12.3 | 25.5 | 46.3 | 58.2 | Invention |

• "h" means "hour(s)", and "d" means "day(s)".
• "Gypsum" and "Accelerating agent" are represented by parts by weight per 100 parts by weight of cement.
• Symbol "-" for "Compression strength" means that sampling of a specimen was impossible due to inadequate strength.

EXAMPLE 3

The test was carried out in the same manner as in Example 1 except that 100 parts by weight of cement d and gypsum in an amount as identified in Table 3, were mixed to obtain spraying concrete, and the accelerating agent was used in an amount as identified in Table 3 per 100 parts by weight of cement, to obtain quick setting spraying concrete. The results are shown in Table 3.

<u>Materials used</u>

Cement d: Fine powder cement, pulverized product of commercially available normal Portland cement, Blaine specific surface area: 6,900 cm$^2$/g, specific gravity: 3.16

Table 3

| Test No. | Gypsum | Accelerating agent | Compression strength (N/mm$^2$) | | | | | Note |
|---|---|---|---|---|---|---|---|---|
| | | | 1h | 3h | 1d | 7d | 28d | |
| 3-1 | 0 | 0.0 | 0.0 | 0.0 | - | 19.9 | 46.8 | Comparative |
| 3-2 | 0 | 10 | 2.1 | 3.6 | 14.1 | 26.0 | 43.5 | Comparative |
| 3-3 | 1 | 10 | 2.5 | 4.6 | 13.3 | 25.0 | 45.8 | Invention |
| 3-4 | 5 | 10 | 3.8 | 5.6 | 16.0 | 27.3 | 55.6 | Invention |
| 3-5 | 10 | 10 | 6.0 | 9.7 | 19.9 | 39.5 | 65.6 | Invention |
| 3-6 | 20 | 10 | 7.0 | 10.5 | 20.5 | 41.1 | 70.7 | Invention |
| 3-7 | 25 | 10 | 7.8 | 11.0 | 21.6 | 45.1 | 71.1 | Invention |
| 3-8 | 10 | 0.0 | 0.0 | 0.0 | - | 21.7 | 49.3 | Comparative |
| 3-9 | 10 | 1.0 | 1.8 | 3.2 | 6.6 | 23.0 | 51.7 | Invention |
| 3-10 | 10 | 5.0 | 3.2 | 6.2 | 17.5 | 38.7 | 63.2 | Invention |

Table 3   (continued)

| Test No. | Gypsum | Accelerating agent | Compression strength (N/mm$^2$) | | | | | Note |
|---|---|---|---|---|---|---|---|---|
| | | | 1h | 3h | 1d | 7d | 28d | |
| 3-11 | 10 | 15 | 6.5 | 10.7 | 24.0 | 45.0 | 68.0 | Invention |
| 3-12 | 10 | 20 | 6.8 | 11.8 | 26.7 | 48.6 | 68.8 | Invention |
| 3-13 | 1 | 1.0 | 0.1 | 0.2 | - | 19.5 | 47.6 | Invention |
| 3-14 | 1 | 20 | 3.8 | 6.1 | 18.5 | 32.3 | 46.9 | Invention |
| 3-15 | 5 | 5.0 | 2.2 | 5.0 | 16.2 | 32.2 | 59.5 | Invention |
| 3-16 | 5 | 15 | 6.0 | 8.6 | 22.7 | 41.3 | 65.2 | Invention |
| 3-17 | 20 | 5.0 | 6.0 | 10.2 | 20.5 | 40.9 | 68.0 | Invention |
| 3-18 | 20 | 15 | 7.1 | 10.8 | 24.5 | 46.7 | 70.6 | Invention |
| 3-19 | 25 | 1.0 | 0.1 | 0.3 | 20.1 | 45.0 | 68.6 | Invention |
| 3-20 | 25 | 20 | 11.0 | 12.1 | 29.0 | 41.2 | 62.9 | Invention |

• "h" means "hour(s)", and "d" means "day(s)".
• "Gypsum" and "Accelerating agent" are represented by parts by weight per 100 parts by weight of cement.
• Symbol "-" for "Compression strength" means that sampling of a specimen was impossible due to inadequate strength.

EXAMPLE 4

The test was carried out in the same manner as in Example 1 except that using unit amounts of materials being 1047 kg/m$^3$ of the fine aggregate and 709 kg/m$^3$ of the coarse aggregate, 100 parts by weight of cement e and gypsum in an amount as identified in Table 4, were mixed to obtain spraying concrete, and the accelerating agent was used in an amount as identified in Table 4 per 100 parts by weight of cement, to obtain quick setting spraying concrete. The results are shown in Table 4.

Materials used

Cement e: Fine powder cement, pulverized product of commercially available blast furnace cement type B, Blaine specific surface area: 5,200 cm$^2$/g, specific gravity: 3.04

Table 4

| Test No. | Gypsum | Accelerating agent | Compression strength (N/mm$^2$) | | | | | Note |
|---|---|---|---|---|---|---|---|---|
| | | | 1h | 3h | 1d | 7d | 28d | |
| 4-1 | 0 | 0 | 0.0 | 0.0 | - | 17.0 | 40.0 | Comparative |
| 4-2 | 0 | 5 | 0.1 | 0.3 | 8.9 | 17.6 | 38.4 | Comparative |
| 4-3 | 10 | 5 | 0.9 | 3.3 | 10.5 | 23.0 | 51.0 | Invention |
| 4-4 | 25 | 5 | 1.3 | 4.6 | 14.4 | 25.1 | 54.3 | Invention |
| 4-5 | 0 | 10 | 0.7 | 1.4 | 10.0 | 19.1 | 38.6 | Comparative |
| 4-6 | 10 | 10 | 2.4 | 4.1 | 14.6 | 26.0 | 56.1 | Invention |
| 4-7 | 25 | 10 | 3.0 | 6.8 | 16.8 | 36.1 | 59.0 | Invention |
| 4-8 | 0 | 20 | 1.0 | 1.8 | 11.0 | 20.5 | 30.6 | Comparative |
| 4-9 | 10 | 20 | 3.4 | 6.5 | 17.3 | 35.7 | 59.0 | Invention |
| 4-10 | 25 | 20 | 6.1 | 9.0 | 20.1 | 36.0 | 58.5 | Invention |

• "h" means "hour(s)", and "d" means "day(s)".
• "Gypsum" and "Accelerating agent" are represented by parts by weight per 100 parts by weight of cement.
• Symbol "-" for "Compression strength" means that sampling of a specimen was impossible due to inadequate strength.

EXAMPLE 5

The test was carried out in the same manner as in Example 1 except that using a unit amount of cement being 400 kg/m$^3$ of fluoro-cement prepared by mixing 100 parts by weight of cement a and fluoro-calcium aluminate in an amount as identified in Table 5, 100 parts by weight of fluoro-cement, and 10 parts by weight of gypsum and 0.5 part by weight of setting retarder A, per 100 parts by weight of cement in the fluoro-cement, were mixed to obtain spraying concrete, and an accelerating agent made of calcium aluminate was mixed thereto in an amount of 10 parts by weight per 100 parts by weight of fluoro-cement, to obtain quick setting spraying concrete. The results are shown in Table 5.

Materials used

Fluoro-calcium aluminate: Main component: $C_{11}A_7 \cdot CaF_2$, Blaine specific surface area: 5,600 cm$^2$/g, specific gravity: 2.91
Setting retarder A: Organic acid, citric acid, commercial product

Table 5

| Test No. | Amount of fluoro-calcium aluminate *1 | Compression strength (N/mm$^2$) | | | Note |
|---|---|---|---|---|---|
| | | 1h | 7d | 28d | |
| 5-1 | 5 | 3.3 | 33.6 | 54.0 | Invention |
| 5-2 | 10 | 4.0 | 37.4 | 55.9 | Invention |
| 5-3 | 20 | 5.5 | 41.3 | 58.4 | Invention |
| 5-4 | 60 | 6.7 | 46.9 | 58.0 | Invention |
| 5-5 | 100 | 6.8 | 47.5 | 55.7 | Invention |

• "h" means "hour(s)", and "d" means "day(s)".
*1:Parts by weight of fluoro-calcium aluminate per 100 parts by weight of cement.

EXAMPLE 6

The test was carried out in the same manner as in Example 5 except that 100 parts by weight cement and 20 parts by weight of fluoro-calcium aluminate were mixed to obtain fluoro-cement, then 100 parts by weight of the fluoro-cement, gypsum in an amount as identified in Table 6 per 100 parts by weight of cement in the fluoro-cement, and 0.5 part by weight of the setting retarder, were mixed to obtain spraying concrete, and the accelerating agent made of calcium aluminate was mixed thereto in an amount as identified in Table 6 per 100 parts by weight of the fluoro-cement, to obtain quick setting spraying concrete. The results are shown in Table 6.

Table 6

| Test No. | Amount of gypsum *1 | Accelerating agent *2 | Compression strength (N/mm$^2$) | | | | | Note |
|---|---|---|---|---|---|---|---|---|
| | | | 1h | 3h | 1d | 7d | 28d | |
| 6-1 | 10 | 0 | 0.0 | 0.0 | - | 19.7 | 44.6 | Comparative |
| 6-2 | 10 | 5 | 1.7 | 4.3 | 14.2 | 31.7 | 49.5 | Comparative |
| 6-3 | 10 | 10 | 3.0 | 6.0 | 16.0 | 32.6 | 53.0 | Comparative |
| 6-4 | 0 | 0 | 0 | 0 | - | 14.0 | 39.5 | Comparative |
| 6-5 | 10 | 0 | 0 | 0 | - | 28.4 | 49.8 | Comparative |
| 6-6 | 25 | 0 | 0 | 0 | 9.8 | 31.2 | 57.0 | Comparative |
| 6-7 | 0 | 5 | 0.4 | 1.2 | 11.9 | 28.6 | 39.7 | Comparative |
| 6-8 | 10 | 5 | 1.9 | 6.5 | 19.6 | 34.0 | 52.3 | Invention |

• "h" means "hour(s)", and "d" means "day(s)".
• Test No. 6-1 to Test No. 6-3 represent the results in cases wherein normal Portland cement was used instead of fluoro-cement.
*1 Parts by weight of gypsum per 100 parts by weight of cement in the fluoro cement.
*2 Parts by weight of the accelerating agent per 100 parts by weight of fluoro cement.

Table 6   (continued)

| Test No. | Amount of gypsum *1 | Accelerating agent *2 | Compression strength (N/mm$^2$) | | | | | Note |
|---|---|---|---|---|---|---|---|---|
| | | | 1h | 3h | 1d | 7d | 28d | |
| 6-9 | 25 | 5 | 3.1 | 7.8 | 21.2 | 40.0 | 58.6 | Invention |
| 6-10 | 0 | 10 | 2.0 | 3.6 | 15.0 | 33.1 | 36.9 | Comparative |
| 6-11 | 1 | 10 | 2.1 | 3.6 | 15.2 | 34.0 | 37.3 | Invention |
| 6-12 | 5 | 10 | 3.1 | 7.0 | 17.5 | 38.2 | 52.6 | Invention |
| 6-13 | 10 | 10 | 5.5 | 9.4 | 23.0 | 41.3 | 58.4 | Invention |
| 6-14 | 20 | 10 | 6.9 | 10.1 | 25.8 | 47.4 | 59.4 | Invention |
| 6-15 | 25 | 10 | 6.3 | 10.9 | 26.2 | 50.2 | 60.7 | Invention |
| 6-16 | 0 | 20 | 3.8 | 4.5 | 19.4 | 37.4 | 35.7 | Comparative |
| 6-17 | 10 | 20 | 7.0 | 11.1 | 30.0 | 53.1 | 60.1 | Invention |
| 6-18 | 25 | 20 | 10.6 | 15.1 | 39.3 | 54.5 | 58.0 | Invention |

• "h" means "hour(s)", and "d" means "day(s)".
• Test No. 6-1 to Test No. 6-3 represent the results in cases wherein normal Portland cement was used instead of fluoro-cement.
*1 Parts by weight of gypsum per 100 parts by weight of cement in the fluoro cement.
*2 Parts by weight of the accelerating agent per 100 parts by weight of fluoro cement.

COMPARATIVE EXAMPLE 1

The test was carried out in the same manner as in Example 5 except that 100 parts by weight of cement and 20 parts by weight of fluoro-calcium aluminate were mixed to obtain fluoro-cement, and the fluoro-cement, gypsum, the setting retarder and the accelerating agent were kneaded all at once.
The compression strength was 4.9 N/mm$^2$ at an age of 1 hour, 8.9 N/mm$^2$ at an age of 3 hours, 22.5 N/mm$^2$ at an age of 1 day, 40.6 N/mm$^2$ at an age of 7 days, and 57.4 N/mm$^2$ at an age of 28 days. However, in this Comparative Example, in a few minutes after initiation of spraying, a cured product deposited on the inner wall of the feeding pipe, thus causing constriction of the inner diameter of the nozzle, and when spraying was further continued, clogging of the feeding pipe resulted in from 10 to 20 minutes.

COMPARATIVE EXAMPLE 2

The test was carried out in the same manner as in Example 5 except that 100 parts by weight of cement and 20 parts by weight of fluoro-calcium aluminate were mixed to obtain fluoro-cement, and the fluoro-cement, the setting retarder and the accelerating agent were preliminarily mixed, and gypsum was joined thereto from a Y type tube.
The compression strength was 4.3 N/mm$^2$ at an age of 1 hour, 8.1 N/mm$^2$ at an age of 3 hours, 12.0 N/mm$^2$ at an age of 1 day, 39.9 N/mm$^2$ at an age of 7 days, and 56.2 N/mm$^2$ at an age of 28 days. However, in this Comparative Example, the accelerating component was added to the fluoro-cement, whereby adjustment of the fluidity of cement was difficult, and like in the case of Comparative Example 1, clogging of the feeding pipe resulted in a short period of time.

COMPARATIVE EXAMPLE 3

The test was carried out in the same manner as in Example 5, except that 100 parts by weight of cement and 20 parts by weight of fluoro-calcium aluminate were mixed to obtain fluoro-cement, and the fluoro-cement and the setting retarder were preliminarily mixed, and the accelerating agent and gypsum preliminarily mixed, were joined thereto from a Y type pipe.
The compression strength was 4.1 N/mm$^2$ at an age of 1 hour, 7.4 N/mm$^2$ at an age of 3 hours, 21.5 N/mm$^2$ at an age of 1 day, 38.7 N/mm$^2$ at an age of 7 days, and 54.5 N/mm$^2$ at an age of 28 days. However, in this Comparative Example, the amount of consumption of the mixture of gypsum and the accelerating agent per hour, increased, and due to shortage of the accelerating agent, the spraying operation had to be discontinued during spraying, and finally, the amount of the accelerating agent used, was as large as 20 kg, as compared with 10 kg required in the present invention.

EXAMPLE 7

Spraying concrete was prepared in the same manner as in Example 1 expect that using unit amounts of materials being 450 kg/m$^3$ of cement, 1030 kg/m$^3$ of fine aggregate and 697 kg/m$^3$ of coarse aggregate, 100 parts by weight of cement, 10 parts by weight of gypsum and a phosphate in an amount as identified in Table 7, were mixed to obtain spraying concrete. The change with time of slump of the spraying concrete was measured. The results are shown in Table 7.

Materials used

Phosphate A: Sodium tripolyphosphate, commercial product
Phosphate B: Sodium primary phosphate, commercial product

Measuring method

Slump: In accordance with JIS A1101

Table 7

| Test No. | Phosphate | Slump (cm) | | | | |
|---|---|---|---|---|---|---|
| | | Initial | 10 min | 20 min | 30 min | 40 min |
| 7-1 | - 0.0 | 7.0 | 6.0 | 5.5 | 1.0 | 0.0 |
| 7-2 | A 0.05 | 8.0 | 8.0 | 7.0 | 5.5 | 4.0 |
| 7-3 | A 0.2 | 13.0 | 13.0 | 12.5 | 11.5 | 11.0 |
| 7-4 | A 0.5 | 16.5 | 16.5 | 16.5 | 16.0 | 15.0 |
| 7-5 | A 1.0 | 19.0 | 19.0 | 19.0 | 19.0 | 18.0 |
| 7-6 | A 3.0 | 22.0 | 22.0 | 22.0 | 22.0 | 21.5 |
| 7-7 | A 5.0 | 24.0 | 24.0 | 24.0 | 24.0 | 23.5 |
| 7-8 | B 0.05 | 9.0 | 9.0 | 8.5 | 7.5 | 6.0 |
| 7-9 | B 0.2 | 14.5 | 14.5 | 14.0 | 13.0 | 11.5 |
| 7-10 | B 0.5 | 17.0 | 17.0 | 17.0 | 16.5 | 16.0 |
| 7-11 | B 1.0 | 20.5 | 20.5 | 20.5 | 20.5 | 20.0 |
| 7-12 | B 3.0 | 23.0 | 23.0 | 23.0 | 23.0 | 22.5 |
| 7-13 | B 5.0 | 25 or more | 25 or more | 25.0 | 25.0 | 24.5 |
| • "Phosphate" is represented by parts by weight per 100 parts by weight of cement. | | | | | | |

EXAMPLE 8

The test was carried out in the same manner as in Example 1 except that using unit amounts of materials being 450 kg/m$^3$ of cement, 1030 kg/m$^3$ of fine aggregate and 697 kg/m$^3$ of coarse aggregate, 100 parts by weight of the cement, 10 parts by weight gypsum and phosphate A in an amount as identified in Table 8 were mixed to obtain spraying concrete, and an accelerating agent made of calcium aluminate was mixed thereto in an amount of 10 parts by weight per 100 parts by weight of cement, to obtain quick setting spraying concrete. The results are shown in Table 8.

Table 8

| Test No. | Phosphate | Compression strength (N/mm$^2$) | | | | | Note |
|---|---|---|---|---|---|---|---|
| | | 1h | 3h | 1d | 7d | 28d | |
| 8-1 | 0.0 | 3.5 | 6.6 | 17.0 | 33.1 | 54.1 | Invention |
| 8-1 | 0.05 | 3.5 | 6.5 | 17.0 | 33.0 | 53.9 | Invention |
| 8-2 | 0.1 | 3.5 | 6.5 | 17.0 | 33.0 | 53.9 | Invention |

Table 8   (continued)

| Test No. | Phosphate | Compression strength (N/mm$^2$) | | | | | Note |
|---|---|---|---|---|---|---|---|
| | | 1h | 3h | 1d | 7d | 28d | |
| 8-3 | 0.2 | 3.5 | 6.4 | 17.0 | 32.9 | 53.5 | Invention |
| 8-4 | 0.5 | 3.4 | 6.2 | 17.0 | 32.8 | 54.0 | Invention |
| 8-5 | 1.0 | 3.0 | 5.7 | 16.6 | 32.2 | 53.0 | Invention |
| 8-6 | 3.0 | 2.5 | 5.0 | 16.0 | 32.0 | 53.4 | Invention |
| 8-7 | 5.0 | 1.5 | 3.0 | 15.1 | 31.4 | 49.0 | Invention |

• "h" means "hour(s)", and "d" means "day(s)".
• "Phosphate" is represented by parts by weight per 100 parts by weight of cement.

EXAMPLE 9

The test was carried out in the same manner as in Example 1 except that 100 parts by weight of cement, 25 parts by weight of gypsum and an amine in an amount as identified in Table 9, were mixed to obtain spraying concrete, and an accelerating agent made of calcium aluminate was mixed in an amount of 20 parts by weight per 100 part by weight of cement, to obtain quick setting spraying concrete. The results are shown in Table 9.

Materials used

Amine A: Commercially available triethanolamine
Amine B: Commercially available monoethanolamine

Measuring method

Adhesion: The quick setting spraying concrete was sprayed to a formwork, and when the sprayed thickness became about 3 cm, vibration was exerted to the sprayed concrete for 30 seconds by a vibrator, whereby the adhesion was evaluated to be "poor" when peeling of the sprayed concrete was observed, and "good" when no peeling was observed.

Table 9

| Test No. | Amine | Compression strength (N/mm$^2$) | | | | | Adhesion | Note |
|---|---|---|---|---|---|---|---|---|
| | | 1h | 3h | 1d | 7d | 28d | | |
| 9-1 | - 0.0 | 7.2 | 10.3 | 22.1 | 41.8 | 53.0 | Poor | Invention |
| 9-2 | A 0.5 | 7.4 | 10.0 | 22.5 | 42.2 | 54.9 | Good | Invention |
| 9-3 | A 1.0 | 7.0 | 10.1 | 22.3 | 42.5 | 57.0 | Good | Invention |
| 9-4 | A 2.0 | 7.1 | 10.3 | 22.4 | 42.9 | 58.9 | Good | Invention |
| 9-5 | A 5.0 | 7.2 | 10.5 | 23.0 | 43.0 | 63.7 | Good | Invention |
| 9-6 | A 10 | 7.0 | 10.0 | 23.1 | 43.2 | 63.3 | Good | Invention |
| 9-7 | B 0.5 | 7.3 | 10.5 | 22.4 | 42.1 | 55.0 | Good | Invention |
| 9-8 | B 1.0 | 7.2 | 10.3 | 23.0 | 42.0 | 57.3 | Good | Invention |
| 9-9 | B 2.0 | 7.2 | 10.3 | 22.8 | 42.8 | 59.0 | Good | Invention |
| 9-10 | B 5.0 | 7.3 | 10.3 | 22.7 | 42.3 | 61.8 | Good | Invention |
| 9-11 | B 10 | 7.2 | 10.4 | 22.9 | 41.9 | 62.5 | Good | Invention |

• "h" means "hour(s)", and "d" means "day(s)".
• "Amine" is represented by parts by weight per 100 parts by weight of cement.
• "Poor" for the adhesion means that concrete has poor body and tends to sag, and "good" means that concrete has good body and shows little sagging.

EXAMPLE 10

The test was carried out in the same manner as in Example 1 except that 100 parts by weight of cement, 10 parts by weight of gypsum and a dust-reducing agent in an amount as identified in Table 10, were mixed to obtain spraying concrete, and an accelerator made of calcium aluminate was mixed thereto in an amount of 10 parts by weight per 100 parts by weight of cement, to obtain quick setting spraying concrete. The results are shown in Table 10.

Materials used

Dust-reducing agent a: Commercially available methylcellulose
Dust-reducing agent b: Commercially available vinyl acetate/ethylene copolymer
Dust-reducing agent c: Commercially available sodium arginate

Measuring method

Amount of dust: The quick setting spraying concrete was sprayed for 30 minutes at a spraying rate of 4 $m^3$/hr in a simulated tunnel prepared in an arch shape with an iron plate and having a height of 3.5 m and a width of 2.5 m, and the amount of dust was measured every 10 minutes at a predetermined position at 3 m from the spraying site, whereupon an average value of the measured values, was shown.

Table 10

| Test No. | Dust-reducing agent | Amount of dust | Note |
|---|---|---|---|
| 10-1 | - 0.0 | 21.6 | Invention |
| 10-2 | a 0.01 | 9.7 | Invention |
| 10-3 | a 0.05 | 3.0 | Invention |
| 10-4 | a 0.1 | 1.7 | Invention |
| 10-5 | a 0.5 | 0.9 | Invention |
| 10-6 | a 1.0 | 0.9 | Invention |
| 10-7 | b 0.01 | 10.3 | Invention |
| 10-8 | b 0.05 | 4.1 | Invention |
| 10-9 | b 0.1 | 2.0 | Invention |
| 10-10 | b 0.5 | 0.8 | Invention |
| 10-11 | b 1.0 | 0.7 | Invention |
| 10-12 | c 0.01 | 8.9 | Invention |
| 10-13 | c 0.05 | 2.1 | Invention |
| 10-14 | c 0.1 | 1.1 | Invention |
| 10-15 | c 0.5 | 0.5 | Invention |
| 10-16 | c 1.0 | 0.3 | Invention |
| • "Dust-reducing agent" is represented by parts by weight per 100 parts by weight of cement. <br> • The amount of dust is represented by mg/$m^3$. | | | |

EXAMPLE 11

The test was carried out in the same manner as in Example 1 except that 100 parts by weight of cement, 10 parts by weight of gypsum and a fiber material in an amount as identified in Table 11, were mixed to obtain spraying concrete, and an accelerating agent made of calcium aluminate was mixed thereto in an amount of 10 parts by weight per 100 parts by weight of cement, to obtain quick setting spraying concrete. The results are shown in Table 11.

Materials used

Fiber material A: Vinylon fiber, manufactured by Kuraray Co., Ltd., fiber length: 30 mm
Fiber material B: Steel fiber, manufactured by Kobe Steel Co., Ltd., fiber length: 30 mm
Fiber material C: Vinylon fiber, manufactured by Kuraray Co., Ltd., fiber length: 0.5 mm
Fiber material D: Vinylon fiber, manufactured by Kuraray Co., Ltd., fiber length: 10 mm
Fiber material E: Vinylon fiber, manufactured by Kuraray Co., Ltd., fiber length: 50 mm

Measuring method

Impact resistance: A specimen of 20 cm in width x 20 cm in length x 1 cm in thickness cut out from sprayed concrete at an age of 1 hour, was placed on standard sand leveled flat, and a spherical ball having a weight of 100 g was dropped thereon from a height of 50 cm. A specimen which underwent cracking and broke before the number of dropping times exceeded five times, was rated as "×", and the specimen which underwent no cracking or the molded product did not break, even when the number of dropping times exceeded 5 times, was rated by "○".

Table 11

| Test No. | Fiber material | Impact resistance | Compression strength (N/mm$^2$) | | | | | Note |
|---|---|---|---|---|---|---|---|---|
| | | | 1h | 3h | 1d | 7d | 28d | |
| 11-1 | - 0 | X | 3.0 | 6.0 | 16.0 | 32.6 | 53.0 | Invention |
| 11-2 | A 0.5 | ○ | 3.1 | 6.2 | 16.5 | 33.0 | 53.4 | Invention |
| 11-3 | A 1.0 | ○ | 3.1 | 6.1 | 16.5 | 33.4 | 53.8 | Invention |
| 11-4 | A 2.0 | ○ | 3.1 | 6.2 | 16.9 | 33.4 | 54.0 | Invention |
| 11-5 | A 5.0 | ○ | 3.2 | 6.3 | 17.9 | 33.6 | 54.2 | Invention |
| 11-6 | A 7.0 | ○ | 3.1 | 6.2 | 16.8 | 33.5 | 53.8 | Invention |
| 11-7 | B 0.5 | ○ | 3.0 | 6.1 | 16.3 | 31.6 | 53.8 | Invention |
| 11-8 | B 1.0 | ○ | 3.1 | 6.2 | 16.6 | 31.8 | 53.8 | Invention |
| 11-9 | B 2.0 | ○ | 3.2 | 6.2 | 17.1 | 32.3 | 54.6 | Invention |
| 11-10 | B 5.0 | ○ | 3.2 | 6.3 | 17.0 | 32.1 | 54.8 | Invention |
| 11-11 | B 7.0 | ○ | 3.0 | 6.2 | 16.8 | 32.2 | 53.7 | Invention |
| 11-12 | C 2.0 | ○ | 3.3 | 6.3 | 17.1 | 33.6 | 54.2 | Invention |
| 11-13 | D 2.0 | ○ | 3.2 | 6.1 | 17.0 | 33.2 | 53.8 | Invention |
| 11-14 | E 2.0 | ○ | 3.0 | 6.0 | 16.2 | 32.3 | 52.5 | Invention |
| • "h" means "hour(s)", and "d" means "day(s)". <br> • "Fiber material" is represented by parts by weight per 100 parts by weight of cement. | | | | | | | | |

EXAMPLE 12

The test was carried out in the same manner as in Example 1 except that using unit amounts of materials being 450 kg/m$^3$ of cement, 1030 kg/m$^3$ of fine aggregate and 697 kg/m$^3$ of coarse aggregate, 100 parts by weight of cement, 10 parts by weight of gypsum and a sulfite in an amount as identified in Table 12, were mixed to obtain spraying concrete, and an accelerating agent made of calcium aluminate was mixed thereto in an amount of 10 parts by weight per 100 parts by weight of cement, to obtain quick setting spraying concrete. However, with respect to the sprayed concrete, the change with time of slump was measured. The results are shown in Table 12.

Materials used

Sulfite A: Potassium sulfite, commercial product
Sulfite B: Sodium bisulfite, commercial product
Sulfite C: Sodium pyrosulfite, commercial product

Table 12

| Test No. | Sulfite | Slump (cm) | | | Compression strength (N/mm$^2$) | | | | | Note |
|---|---|---|---|---|---|---|---|---|---|---|
| | | Initial | 30 min | 60 min | 1h | 3h | 1d | 7d | 28d | |
| 12-1 | 0 | 7.0 | 1.5 | - | 3.0 | 6.0 | 16.2 | 33.3 | 53.2 | Invention |
| 12-2 | A 0.05 | 9.0 | 8.0 | 4.0 | 3.6 | 7.9 | 18.0 | 38.6 | 54.9 | Invention |
| 12-3 | A 0.07 | 10.0 | 8.5 | 4.5 | 4.1 | 8.5 | 19.7 | 39.8 | 56.1 | Invention |
| 12-4 | A 0.5 | 13.5 | 10.5 | 6.5 | 5.4 | 9.1 | 20.8 | 41.7 | 59.3 | Invention |
| 12-5 | A 1.0 | 17.0 | 15.0 | 12.5 | 6.0 | 10.0 | 23.1 | 43.0 | 61.7 | Invention |
| 12-6 | A 2.0 | 20.5 | 18.5 | 17.0 | 6.1 | 10.4 | 22.8 | 42.8 | 61.3 | Invention |
| 12-7 | B 0.05 | 8.5 | 7.0 | 1.0 | 3.4 | 7.3 | 17.9 | 36.7 | 55.1 | Invention |
| 12-8 | B 0.07 | 9.0 | 7.5 | 2.5 | 3.9 | 7.5 | 18.6 | 40.1 | 56.1 | Invention |
| 12-9 | B 0.5 | 12.0 | 9.5 | 7.0 | 4.5 | 8.0 | 19.9 | 42.4 | 58.2 | Invention |
| 12-10 | B 1.0 | 15.5 | 12.0 | 9.0 | 5.0 | 9.0 | 20.7 | 43.1 | 60.4 | Invention |
| 12-11 | B 2.0 | 19.0 | 17.5 | 15.5 | 5.0 | 8.9 | 21.0 | 43.0 | 60.4 | Invention |
| 12-12 | C 0.05 | 8.5 | 6.5 | 1.0 | 3.6 | 7.7 | 18.7 | 39.0 | 54.0 | Invention |
| 12-13 | C 0.07 | 9.0 | 7.5 | 2.0 | 4.0 | 8.1 | 19.5 | 40.6 | 55.8 | Invention |
| 12-14 | C 0.5 | 12.0 | 9.0 | 7.0 | 5.0 | 8.8 | 20.7 | 42.0 | 58.0 | Invention |
| 12-15 | C 1.0 | 15.0 | 11.5 | 9.5 | 5.5 | 9.2 | 21.5 | 43.1 | 60.0 | Invention |
| 12-16 | C 2.0 | 18.0 | 17.0 | 13.5 | 5.6 | 9.2 | 21.6 | 43.4 | 60.1 | Invention |

• "h" means "hour(s)", and "d" means "day(s)".
• "Sulfite" is represented by parts by weight per 100 parts by weight of cement.
• Symbol "-" for slump means "not measurable".

EXAMPLE 13

The test was carried out in the same manner as in Example 1 except that 100 parts by weight of cement and 15 parts by weight of gypsum were mixed to obtain spraying concrete, and an accelerating agent prepared by mixing 100 parts by weight of calcium aluminate, and an alkali metal aluminate or an alkali metal carbonate, in an amount as identified in Table 13, was added thereto in an amount of 10 parts by weight per 100 parts by weight of cement, to obtain quick setting spraying concrete.
The results are shown in Table 13.

Material used

Alkali metal aluminate: Commercially available sodium aluminate
Alkali metal carbonate: Commercially available sodium carbonate

Table 13

| Test No. | Alkali metal aluminate | Alkali metal carbonate | Compression strength (N/mm$^2$) | | | | |
|---|---|---|---|---|---|---|---|
| | | | 1h | 3h | 1d | 7d | 28d |
| 13-1 | 0.0 | 0.0 | 3.4 | 6.6 | 17.5 | 38.4 | 55.0 |
| 13-2 | 0.1 | 0.0 | 4.0 | 7.0 | 19.3 | 39.2 | 55.0 |
| 13-3 | 1.0 | 0.0 | 4.3 | 7.4 | 19.5 | 40.6 | 55.2 |
| 13-4 | 2.0 | 0.0 | 4.5 | 7.6 | 20.8 | 41.2 | 55.5 |
| 13-5 | 5.0 | 0.0 | 4.6 | 7.9 | 21.6 | 42.7 | 56.3 |
| 13-6 | 10.0 | 0.0 | 4.8 | 8.3 | 23.1 | 43.1 | 58.4 |
| 13-7 | 25 | 0.0 | 5.2 | 8.4 | 24.5 | 42.2 | 59.7 |

Table 13   (continued)

| Test No. | Alkali metal aluminate | Alkali metal carbonate | Compression strength (N/mm$^2$) | | | | |
|---|---|---|---|---|---|---|---|
| | | | 1h | 3h | 1d | 7d | 28d |
| 13-8 | 30 | 0.0 | 5.4 | 8.8 | 24.0 | 41.9 | 57.4 |
| 13-9 | 40 | 0.0 | 5.7 | 8.9 | 23.0 | 41.3 | 53.2 |
| 13-10 | 50 | 0.0 | 6.3 | 9.2 | 22.8 | 37.4 | 50.6 |
| 13-11 | 55 | 0.0 | 6.4 | 9.5 | 23.6 | 35.4 | 48.8 |
| 13-12 | 0.0 | 0.5 | 4.0 | 7.2 | 19.4 | 38.8 | 55.2 |
| 13-13 | 0.0 | 1.0 | 4.5 | 8.8 | 19.9 | 39.6 | 56.0 |
| 13-14 | 0.0 | 10.0 | 5.3 | 10.2 | 23.3 | 41.9 | 58.2 |
| 13-15 | 0.0 | 50 | 7.5 | 10.7 | 24.4 | 43.2 | 60.3 |
| 13-16 | 0.0 | 100 | 7.7 | 11.6 | 24.5 | 38.0 | 57.0 |
| 13-17 | 0.0 | 200 | 8.4 | 11.9 | 24.8 | 37.2 | 43.0 |
| 13-18 | 10.0 | 30 | 8.0 | 12.2 | 24.7 | 42.2 | 60.5 |

- "h" means "hour(s)", and "d" means "day(s)".
- "Alkali metal aluminate" and "alkali metal carbonate" are represented by parts by weight per 100 parts by weight of calcium aluminate.

For the purpose of comparison, without adding gypsum to the cement mortar, an accelerating agent prepared by mixing 100 parts by weight of calcium aluminate, 100 parts by weight of gypsum and 10 parts by weight of sodium aluminate, was added by an air force-feeding accelerating agent-adding apparatus to concrete comprising 400 kg/m$^3$ of cement, 1055 kg/m$^3$ of fine aggregate, 713 kg/m$^3$ of coarse aggregate and 200 kg/m$^3$ of water, and the mixture was sprayed.

As a result, in order to obtain the same strength-providing property as in Test No. 13-6, it was necessary to incorporate the accelerating agent in an amount of at least 20 parts by weight, which is at least twice of the amount required in Test No. 13-6. Further, from the working aspect, dust was substantial, and it was necessary to discontinue spraying and to supplement the accelerating agent to the accelerating agent-adding apparatus, and clogging of the hose during spraying was so often that the operation was impractical.

EXAMPLE 14

Dry concrete was mixed in the same manner as in Example 1 except that gypsum was mixed in an amount of 15 parts by weight per 100 parts by weight of cement, and it was transported to the spraying machine by a belt conveyer.

An accelerating agent prepared by mixing 100 parts by weight of calcium aluminate and 10 parts by weight of an alkali metal aluminate, was added to the dry concrete on the belt conveyer so that it would be 10 parts by weight per 100 parts by weight of cement in the dry concrete.

The dry concrete having the accelerating agent added, was fed under pressure with air from the spraying machine, and water was added thereto in an amount of 50 parts by weight per 100 parts by weight of cement, whereupon dry spraying operation was carried out.

As a result, the spraying operation was carried out without a trouble such as clogging of the pipe, and the compression strength of the sprayed material was measured and found to be 4.1 N/mm$^2$ at an age of 1 hour and 58.5 N/mm$^2$ at an age of 28 days.

For the purpose of comparison, dry spraying operation was carried out in the same manner as above except that an accelerating agent prepared by mixing 100 parts by weight of calcium aluminate, 100 parts by weight of anhydrous gypsum and 10 parts by weight of an alkali metal aluminate, was added to the dry concrete containing no gypsum, in an amount of 20 parts by weight per 100 parts by weight of cement.

As a result, formation of dust was substantial, and clogging of the material in the feeding pipe occurred some time after the initiation of spraying, whereby no adequate operation was carried out.

EXAMPLE 15

Dry spraying operation was carried out in the same manner as in Example 14 except that using a unit amount of cement being 400 kg/m$^3$ of fluoro-cement prepared by mixing 100 parts by weight of cement and 20 parts by weight of fluoro-calcium aluminate, 100 parts by weight of the fluoro-cement and 10 parts by weight of gypsum per 100 parts by weight of cement in the fluoro-cement, were mixed to obtain dry concrete, and the accelerating agent was added thereto in an amount of 10 parts by weight per 100 parts by weight of fluoro-cement in the dry concrete.

As a result, the spraying operation was carried out without any trouble such as clogging of the pipe, and the compression strength of the sprayed material was measured and found to be 8.0 N/mm$^2$ at an age of 1 hour and 70.5 N/mm$^2$ at an age of 28 days.

EXAMPLE 16

The test was carried out in the same manner as in Example 1 except that 100 parts by weight of cement, 10 parts by weight of gypsum and high performance water-reducing agent $\alpha$ in an amount as identified in Table 14, were mixed to obtain spraying concrete, and an accelerating agent prepared by mixing 100 parts by weight of calcium aluminate and 10 parts by weight of an alkali metal aluminate, was added thereto in an amount of 10 parts by weight per 100 parts by weight of cement, to obtain quick setting spraying concrete. The results are shown in Table 14.

Materials used

Water-reducing agent $\alpha$: Commercially available high performance water-reducing agent, main component: sodium naphthalene sulfonate

Table 14

| Test No. | Water-reducing agent | Compression strength (N/mm$^2$) | | |
|---|---|---|---|---|
| | | 1h | 1d | 28d |
| 16-1 | 0.05 | 3.9 | 22.2 | 52.1 |
| 16-2 | 0.1 | 3.9 | 21.3 | 51.9 |
| 16-3 | 0.5 | 3.8 | 21.4 | 51.6 |
| 16-4 | 1.0 | 3.5 | 21.3 | 52.0 |
| 16-5 | 2.0 | 2.9 | 20.2 | 51.5 |
| 16-6 | 3.0 | 1.9 | 19.4 | 51.4 |
| • "h" means "hour(s)", "day(s)". and "d" means | | | | |
| • "Water-reducing agent" is represented by parts by weight per 100 parts by weight of cement as solid content. | | | | |

EXAMPLE 17

The test was carried out in the same manner as in Example 1 except that 100 parts by weight of cement, 10 parts by weight of gypsum and a setting retarder or a setting accelerator in an amount as shown in Table 15, were mixed to obtain spraying concrete, and an accelerating agent prepared by mixing 100 parts by weight of calcium aluminate and 10 parts by weight of an alkali metal aluminate, was mixed thereto in an amount of 7 parts by weight per 100 parts by weight of cement, to obtain quick setting spraying concrete. The results are shown in Table 15.

Materials used

Setting retarder B: Alkali metal carbonate, sodium carbonate, commercial product
Setting retarder C: Alkali metal carbonate, sodium bicarbonate, commercial product
Setting accelerator: Slaked lime, commercial product

Table 15

| Test No. Test No. | Setting retarder (parts by weight) | Setting accelerator | Compression strength (N/mm$^2$) | | |
|---|---|---|---|---|---|
| | | | 1h | 1d | 28d |
| 17-1 | - 0.0 | 0.0 | 2.2 | 18.8 | 51.4 |
| 17-2 | A 0.1 | 0.0 | 2.4 | 20.4 | 54.0 |

Table 15   (continued)

| Test No. Test No. | Setting retarder (parts by weight) | Setting accelerator | Compression strength (N/mm$^2$) | | |
|---|---|---|---|---|---|
| | | | 1h | 1d | 28d |
| 17-3 | A 1.0 | 0.0 | 2.2 | 19.5 | 50.8 |
| 17-4 | A 10.0 | 0.0 | 2.0 | 17.4 | 51.6 |
| 17-5 | B 0.1 | 0.0 | 2.5 | 21.6 | 52.8 |
| 17-6 | B 1.0 | 0.0 | 2.9 | 22.8 | 53.4 |
| 17-7 | B 10.0 | 0.0 | 4.0 | 23.0 | 54.9 |
| 17-8 | A 1.0 B 1.0 | 0.0 | 2.8 | 23.8 | 52.9 |
| 17-9 | C 0.1 | 0.0 | 2.5 | 20.8 | 50.8 |
| 17-10 | C 1.0 | 0.0 | 2.7 | 21.6 | 52.8 |
| 17-11 | C 10.0 | 0.0 | 3.0 | 22.0 | 51.4 |
| 17-12 | A 1.0 C 2.0 | 0.0 | 3.0 | 22.0 | 53.5 |
| 17-13 | - 0.0 | 0.1 | 2.2 | 21.6 | 54.5 |
| 17-14 | - 0.0 | 1.0 | 2.4 | 20.8 | 53.6 |
| 17-15 | - 0.0 | 10.0 | 2.8 | 22.5 | 54.2 |
| 17-17 | A 1.0 | 5.0 | 2.8 | 23.5 | 51.9 |

• "h" means "hour(s)", and "d" means "day(s)".
• "Setting retarder" and "Setting accelerator" are represented by parts by weight per 100 parts by weight of cement.

EXAMPLE 18

The test was carried out in the same manner as in Example 1 except that 100 parts by weight of cement, 10 parts by weight of gypsum, 1 part by weight of water-reducing agent β and ultrafine powder in an amount as identified in Table 16, were mixed to obtain spraying concrete, and an accelerating agent prepared by mixing 100 parts by weight of calcium aluminate and 10 parts by weight of an alkali metal aluminate, was mixed thereto in an amount of 10 parts by weight per 100 parts by weight of cement, to obtain quick setting spraying concrete.
The results are shown in Table 16.

Materials used

Water-reducing agent β: Commercially available high performance water-reducing agent, main component: sodium polycarboxylate
Ultrafine powder A: Commercially available fine slag, Blaine specific surface area: 6,500 cm$^2$/g, average particle size: 4 μm
Ultrafine powder B: Silica fume, commercial product, average particle size: at most 10 μm
Ultrafine powder C: Kaolin, commercial product, average particle size: at most 10 μm
Ultrafine powder D: Methakaolin, commercial product, average particle size: at most 10 μm

Measuring method

Rebound ratio: The quick setting spraying concrete was sprayed to a simulated tunnel having a height of 3.5 mm and a width of 2.5 mm at a spraying rate of 4 m$^3$/hr for 30 minutes. After completion of the spraying, the amount of the sprayed concrete which did not attach and fell off, was measured, and the rebound ratio was calculated by the formula:

Rebound ratio = weight of the sprayed concrete which

did not attach to the simulated tunnel

at the time of spraying and fell

23

## EP 0 769 482 B1

off/weight of spraying concrete used

for spraying $\times$ 100 (%)

Table 16

| Test No. | Ultra fine powder | Rebound ratio (%) |
|---|---|---|
| 18-1 | A 0 | 24.3 |
| 18-2 | A 2 | 20.5 |
| 18-3 | A 10 | 15.4 |
| 18-4 | A 30 | 10.6 |
| 18-5 | B 2 | 18.8 |
| 18-6 | B 10 | 4.0 |
| 18-7 | B 30 | 2.0 |
| 18-8 | C 10 | 7.0 |
| 18-9 | D 10 | 3.6 |
| • "Ultra fine powder" is represented by parts by weight per 100 parts by weight of cement. | | |

EXAMPLE 19

The test was carried out in the same manner as in Example 18 except that 100 parts by weight of cement, 10 parts by weight of gypsum, 10 parts by weight of ultrafine powder B, 1 part by weight of setting retarder A, 2 parts by weight of setting retarder B and 0.5 part by weight of a setting accelerator, were mixed to obtain spraying concrete.
As a result, quick setting spraying concrete whereby dust was extremely small, and the rebound ratio was as small as 3.6%, was obtained.
This quick setting spraying concrete was sprayed, whereby the strength at an age of 1 hour was 3.0 N/mm$^2$, and the strength at an age of 28 days was 59.5 N/mm$^2$. Thus, high performance sprayed concrete having very high strength both at the initial stage and for a long period of time, was obtained.

EXAMPLE 20

The test was carried out in the same manner as in Example 18 except that 100 parts by weight of cement, 10 parts by weight of gypsum, 1.0 part by weight of water-reducing agent β, 10 parts by weight of ultrafine powder D and a setting retarder and a setting accelerator in amounts as identified in Table 17, were mixed to obtain spraying concrete, and spraying was carried out at a spraying rate of 2.5 m$^3$/hr. The results are shown in Table 17.

Table 17

| Test No. | Setting retarder | Setting accelerator | Rebound ratio (%) | Dust | Compression strength (N/mm$^2$) | |
|---|---|---|---|---|---|---|
| | | | | | 1h | 28d |
| 20-1 | A 1.0 | 0.0 | 3.2 | Little | 2.7 | 61 |
| 20-2 | - 0.0 | 1.0 | 4.0 | Little | 3.3 | 57 |
| 20-3 | A 1.0 | 1.0 | 3.1 | Little | 3.6 | 63 |
| • "h" means "hour(s)", and "d" means "day(s)". | | | | | | |
| • "Setting retarder" and "Setting accelerator" are represented by parts by weight per 100 parts by weight of cement. | | | | | | |
| • Compression strength is represented by N/mm$^2$. | | | | | | |

EXAMPLE 21

The test was carried out in the same manner as in Example 1 except that using a unit amount of cement being as identified in Table 18 and an amount of water being as identified in Table 18 per 100 parts by weight of cement, 100 parts by weight of cement and 10 parts of gypsum were mixed to obtain spraying concrete, and an accelerating agent

**EP 0 769 482 B1**

prepared by mixing 100 parts by weight of calcium aluminate and an alkali metal aluminate, was used in an amount of 10 parts by weight per 100 parts by weight of cement, to obtain quick setting spraying concrete. With respect to the spraying concrete, slump immediately after the kneading was measured. The results are shown in Table 18.

Table 18

| Test No. | Cement | Water | Slump (cm) | Compression strength (N/mm$^2$) | | | Note |
|---|---|---|---|---|---|---|---|
| | | | | 1h | 1d | 28d | |
| 21-1 | 550 | 35 | 4.0 | 6.8 | 32.9 | 73.8 | Invention |
| 21-2 | 500 | 40 | 7.0 | 5.7 | 26.7 | 65.7 | Invention |
| 21-3 | 450 | 45 | 7.5 | 5.1 | 24.7 | 61.0 | Invention |
| 21-4 | 400 | 50 | 8.0 | 4.8 | 23.1 | 58.4 | Invention |
| 21-5 | 380 | 60 | 12.0 | 3.0 | 15.8 | 46.8 | Invention |
| 21-6 | 340 | 100 | 24.0 | 0.7 | 9.0 | 18.5 | Comparative |

• "h" means "hour(s)", and "d" means "day(s)".
• The amount of cement is represented by kg/m$^3$.
• "Water" is represented by parts by weight per 100 parts by weight of cement.

The more water is contained, the lower the compression strength is.

EXAMPLE 22

Gypsum having a Blaine specific surface area of 5,000 cm$^2$/g and calcium aluminate were put into separate bags and stored at a temperature of 20°C under a humidity of 60%. At the time of their use, gypsum was mixed with cement and formed into mortar with a ratio of cement/fine aggregate = 1/3 using water in an amount of 60 parts by weight per 100 parts by weight of cement a. This mortar and calcium aluminate were mixed to obtain quick setting mortar. Separately, a mixture obtained by mixing gypsum having a Blaine specific surface is of 5,000 cm$^2$/g and calcium aluminate, was stored in the same manner. At the time of use, a mortar was prepared with a ratio of cement/fine aggregate = 1/3 using water in an amount of 60 parts by weight per 100 parts by weight of cement a. This mortar and the mixture were mixed to prepare quick setting mortar. To compare the storage stabilities of these quick setting mortars, a setting test of the mortars was carried out. The total amount of calcium aluminate and gypsum, was 15 parts by weight per 100 parts by weight of cement in each case. The results are shown in Table 19.

Measuring method

Setting test: Measured at 20°C in accordance with a proctor resistance test (ASTM C 403).

Table 19

| Test No. | Gypsum | Storage period in room | Initial setting time (sec) | | | Final setting time (min) | | |
|---|---|---|---|---|---|---|---|---|
| | | | I | II | Difference | I | II | Difference |
| 22-1 | 100 | 0 | 30 | 25 | - 5 | 10 | 10 | - 0 |
| 22-2 | 100 | 1 month | 63 | 25 | - 38 | 15 | 10 | - 3 |
| 22-3 | 100 | 3 months | 185 | 25 | - 160 | 20 | 10 | - 7 |
| 22-4 | 100 | 6 months | 220 | 25 | - 195 | 27 | 10 | - 15 |
| 22-5 | 100 | 1 year | 300 | 25 | - 275 | 30 | 10 | - 18 |
| 22-6 | 150 | 0 | 38 | 35 | - 3 | 12 | 12 | - 1 |
| 22-7 | 150 | 1 month | 86 | 35 | - 51 | 23 | 12 | - 9 |

25

Table 19   (continued)

| Test No. | Gypsum | Storage period in room | Initial setting time (sec) | | | Final setting time (min) | | |
|---|---|---|---|---|---|---|---|---|
| | | | I | II | Difference | I | II | Difference |
| 22-8 | 150 | 3 months | 220 | 35 | - 185 | 30 | 12 | - 19 |
| 22-9 | 150 | 6 months | 310 | 35 | - 275 | 38 | 12 | - 24 |
| 22-10 | 150 | 1 year | 485 | 35 | - 450 | 55 | 12 | - 44 |

• "Gypsum" is represented by parts by weight per 100 parts by weight of calcium aluminate.
• "I" for "Initial setting time" and "Final setting time" represents a case wherein gypsum and calcium aluminate were preliminarily mixed.
• "II" for "Initial setting time" and "Final setting time" represents a case wherein gypsum and calcium aluminate are mixed at the time of use.

EXAMPLE 23

Using unit amounts of materials being 400 kg/m$^3$ of cement, 1055 kg/m$^3$ of fine aggregate, 713 kg/m$^3$ of coarse aggregate and 200 kg/m$^3$ of water, these materials were mixed to obtain spraying concrete, which was fed under pressure by means of a spraying machine "Ariber 280", tradename, manufactured by Ariber Company.

At an intermediate position, two Y type pipes were connected, and an accelerating agent made of calcium aluminate was fed under pressure with air from one of them in a amount as identified in Table 20 per 100 parts by weight of cement a, and gypsum was fed under pressure with air from the other pipe in an amount of 10 parts by weight per 100 part by weight of cement. With the combined mixture, spraying operation was carried out at a rate of 4 m$^3$/hr and the compression strength at each age was measured. The results are shown in Table 20.

Table 20

| Test No. | Accelerating agent | Compression strength (N/mm$^2$) | | | | Note |
|---|---|---|---|---|---|---|
| | | 1h | 1d | 7d | 28d | |
| 23-1 | 0.0 | 0.0 | - | 18.0 | 45.1 | Comparative |
| 23-2 | 1.0 | 0.1 | - | 18.3 | 45.2 | Invention |
| 23-3 | 2.0 | 0.4 | - | 22.5 | 45.8 | Invention |
| 23-4 | 5.0 | 1.8 | 13.9 | 30.7 | 50.4 | Invention |
| 23-5 | 10 | 3.1 | 15.0 | 33.1 | 52.8 | Invention |
| 23-6 | 15 | 3.7 | 17.5 | 37.4 | 53.9 | Invention |
| 23-7 | 20 | 4.5 | 20.0 | 41.2 | 56.5 | Invention |

• "h" means "hour(s)", and "d" means "day(s)".
• "Accelerating agent" is represented by parts by weight per 100 parts by weight of cement.
• Symbol "-" for "Compression strength" means that sampling of a specimen was impossible due to inadequate strength.

COMPARATIVE EXAMPLE 4

In the same manner as in Example 23, spraying concrete was prepared and fed under pressure, and at an intermediate position, Y type pipes were connected, so that an accelerating agent made of calcium aluminate and gypsum were fed under pressure with air in an amount of 10 parts by weight each, per 100 parts by weight of cement, to preliminarily combine them. Then, with the mixture, spraying operation was carried out at a rate of 4 m$^3$/hr. As a result, the quick setting concrete cured in 5 minutes after kneading, whereby spraying operation was impossible.

COMPARATIVE EXAMPLE 5

Spraying concrete prepared in the same manner as in Example 23, gypsum in an amount of 10 parts by weight per 100 parts by weight of cement and an accelerating agent made of calcium aluminate in an amount of 10 parts by weight per 100 parts by weight of cement, were mixed and fed under pressure, and spraying operation was carried out at a rate of 4 m$^3$/hr, whereupon the compression strength was measured in the same manner as in Example 1. As a result, the compression strength was 3.0 N/mm$^2$ at an age of 1 hour, and 52.0 N/mm$^2$ at an age of 28 days.

Further, as the spraying time passed, a cured substance started to deposit in the feeding pipe, and the feeding pipe was finally clogged.

EXAMPLE 24

The test was carried out in the same manner as in Example 23 except that an accelerating agent prepared by mixing an alkali metal aluminate or an alkali metal carbonate in an amount as identified in Table 21 per 100 parts by weight of calcium aluminate, was mixed in an amount of 10 parts by weight per 100 parts by weight of cement. The results are shown in Table 21.

Table 21

| Test No. | Alkali metal aluminate | Alkali metal carbonate | Compression strength (N/mm$^2$) | | | |
|---|---|---|---|---|---|---|
| | | | 1h | 1d | 7d | 28d |
| 24-1 | 0.0 | 0.0 | 3.1 | 15.0 | 33.1 | 52.8 |
| 24-2 | 0.1 | 0.0 | 3.5 | 17.8 | 37.0 | 51.1 |
| 24-3 | 5.0 | 0.0 | 4.0 | 19.9 | 40.2 | 54.8 |
| 24-4 | 10 | 0.0 | 4.3 | 20.8 | 41.6 | 55.7 |
| 24-5 | 20 | 0.0 | 4.6 | 22.1 | 40.8 | 55.0 |
| 24-6 | 50 | 0.0 | 5.2 | 21.3 | 36.5 | 49.0 |
| 24-7 | 0 | 0.5 | 3.4 | 16.8 | 35.0 | 53.1 |
| 24-8 | 0 | 1.0 | 4.0 | 18.0 | 36.2 | 54.8 |
| 24-9 | 0 | 10 | 4.6 | 18.4 | 37.7 | 56.8 |
| 24-10 | 0 | 50 | 7.0 | 22.4 | 40.0 | 57.5 |
| 24-11 | 0 | 100 | 7.1 | 22.3 | 37.7 | 55.1 |
| 24-12 | 0 | 200 | 7.5 | 22.5 | 36.4 | 40.4 |

• "h" means "hour(s)", and "d" means "day(s)".
• "Alkali metal aluminate" and "Alkali metal carbonate" are represented by parts by weight per 100 parts by weight of cement.

EXAMPLE 25

The test was carried out in the same manner as in Example 1 except that 100 parts by weight of cement and 10 parts by weight of gypsum were mixed to obtain spraying concrete, and an accelerating agent prepared by mixing 100 parts by weight of calcium aluminate and gypsum in an amount as identified in Table 22, was mixed in an amount of 10 parts by weight per 100 parts by weight of cement, to obtain quick setting spraying concrete. The results are shown in Table 22.

Table 22

| Test No. | Gypsum | Compression strength (N/mm$^2$) | | | | | Note |
|---|---|---|---|---|---|---|---|
| | | 1h | 3h | 1d | 7d | 28d | |
| 25-1 | 0 | 3.0 | 6.0 | 16.0 | 32.6 | 53.0 | Invention |
| 25-2 | 10 | 2.8 | 5.3 | 15.0 | 33.0 | 53.4 | Invention |
| 25-3 | 50 | 2.2 | 4.9 | 14.7 | 33.4 | 53.9 | Invention |
| 25-4 | 80 | 2.1 | 4.8 | 14.7 | 33.8 | 54.7 | Invention |
| 25-5 | 100 | 2.0 | 4.7 | 14.5 | 34.4 | 57.0 | Invention |
| 25-6 | 150 | 1.7 | 4.5 | 14.2 | 35.0 | 57.1 | Invention |
| 25-7 | 200 | 1.0 | 4.0 | 12.0 | 33.2 | 54.4 | Invention |

• "h" means "hour(s)", and "d" means "day(s)".
• "Gypsum" is represented by parts by weight per 100 parts by weight of calcium aluminate.

COMPARATIVE EXAMPLE 6

The test was carried out in the same manner as in Example 22 except that gypsum and calcium aluminate were preliminarily mixed, and a setting test of mortar was carried out with respect to 5 lots differing in the mixing day. The results are shown in Table 23.

In a case where gypsum and calcium aluminate are preliminarily mixed, the initial setting time and the final setting time of the mixture of gypsum and calcium aluminate may become very long in a few days depending upon the mixing day, and no stabilized physical properties can be obtained. Therefore, the mixtures can not be used as acceptable products.

Table 23

| Test No. | Gypsum | Mixture lot | Number of days in storage (days) | Initial setting time (min) | Final setting time (sec) |
|---|---|---|---|---|---|
| 26-1 | 150 | 1 | 0 | 38 | 12 |
| 26-2 | 150 | | 3 | 50 | 16 |
| 26-3 | 150 | 2 | 0 | 38 | 12 |
| 26-4 | 150 | | 3 | 70 | 19 |
| 26-5 | 150 | 3 | 0 | 38 | 12 |
| 26-6 | 150 | | 3 | 100 | 27 |
| 26-7 | 150 | 4 | 0 | 38 | 12 |
| 26-8 | 150 | | 3 | 40 | 14 |
| 26-9 | 150 | 5 | 0 | 38 | 12 |
| 26-10 | 150 | | 3 | 210 | 33 |
| • "Gypsum" is represented by parts by weight per 100 parts by weight of calcium aluminate. ||||||
| • Mixture lots 1 to 5 differ from one another in the mixing day. ||||||

By using the spraying material of the present invention, the initial and long term strength-providing properties will be excellent as compared with conventional spraying material which is of a calcium aluminate type or a mixture comprising calcium aluminate, an alkali metal aluminate and/or an alkali metal carbonate. Accordingly, the sprayed thickness can be made thin as compared with the thickness by such a conventional method, the spraying time can be shortened, and the spraying amount can be reduced, such being economical.

Further, the amount of an accelerating agent to be added at site can be reduced to about one half. Since the amount of the accelerating agent to be added at site can be reduced, it is unnecessary to discontinue the spraying operation during spraying, and formation of dust during spraying can be reduced.

As compared with a case where a cement and an accelerating agent prepared by preliminarily mixing gypsum and calcium aluminate, are mixed, the storage stability can be increased, and without the product of the present invention, practical use is impossible.

By using fine powder cement, the initial and long term strength-providing properties can further be substantially improved.

By using fluoro-cement, the initial, intermediate and long term strength-providing properties can be improved without clogging of the nozzle or deterioration in the performance of the accelerating agent, and the rebound ratio can also be reduced.

By the effects of a phosphate, the fluidity will be excellent even when the amount of water used, is reduced, whereby the working efficiency will be improved, since there will be substantially no possibility of clogging in the feeding pipe.

By incorporation of a dust-reducing agent, the amount of dust can remarkably be reduced, whereby the working environment can be improved.

By incorporating a fiber material, it is possible to obtain quick setting spraying concrete excellent in impact resistance or elasticity.

By using a sulfite, the initial and long term strength-providing properties will be excellent, whereby a decrease with time of slump can be reduced.

In a case where cement, an accelerating agent and gypsum are fed separately under pressure, there will be no deterioration in the quality of the accelerating agent by gypsum.

Further, by using spraying material which comprises cement mortar comprising cement and gypsum as main components, and an accelerating agent comprising calcium aluminate and gypsum as main components, the initial and long term strength-providing properties can substantially be improved. In such a case, by incorporating gypsum to the cement mortar, it is possible to substantially reduce the amount of the accelerating agent prepared by mixing calcium aluminate and gypsum, so that the quality deterioration can be prevented.

**Claims**

1. A spraying material which comprises cement mortar comprising cement, gypsum and from 35 to 60 parts by weight of water per 100 parts by weight of cement, and an accelerating agent comprising calcium aluminate.

2. The spraying material as defined in claim 1 **characterised in that** the accelerating agent comprises calcium aluminate and gypsum.

3. A spraying material obtainable by feeding separately under pressure cement mortar, an accelerating agent, and gypsum, wherein the accelerating agent comprises calcium aluminate.

4. The spraying material according to any one of Claims 1 to 3, wherein the cement is cement having a Blaine specific surface area of at least 4,500 cm$^2$/g and/or cement having a calcium aluminate containing fluorine.

5. The spraying material according to any one of Claims 1 to 4, wherein the accelerating agent comprises calcium aluminate, and an alkali metal aluminate and/or an alkali metal carbonate.

6. The spraying material according to any one of Claims 1 to 5, wherein the cement mortar further contains a phosphate.

7. The spraying material according to any one of Claims 1 to 6, which further contains one or more admixtures selected from the group consisting of amines, dust-reducing agents, fiber materials, sulfites, water reducing agents, setting retarders, setting accelerators and ultrafine powders.

8. A spraying method which comprises using the spraying material according to any one of Claims 1 to 7.

**Patentansprüche**

1. Sprühmaterial umfassend Zementmörtel, der Zement, Gips und zwischen 35 und 60 Gewichtsteile Wasser pro 100 Gewichtsteile Zement enthält, und einen Abbindebeschleuniger enthaltend Calciumaluminat.

2. Das Sprühmaterial gemäß Anspruch 1, **dadurch gekennzeichnet, dass** der Abbindebeschleuniger Calciumaluminat und Gips enthält.

3. Sprühmaterial herstellbar durch getrenntes Zuführen unter Druck von Zementmörtel, einem Abbindebeschleuniger und Gips, wobei der Zementmörtel Zement und zwischen 35 und 60 Gewichtsteile Wasser pro 100 Gewichtsteile Zement enthält und wobei der Abbindebeschleuniger Calciumaluminat enthält.

4. Das Sprühmaterial gemäß einem der Ansprüche 1 bis 3, wobei der Zement ein Zement mit einer spezifischen Oberfläche nach Blaine von mindestens 4500 cm$^2$/g und/oder Zement mit fluorhaltigem Calciumaluminat ist.

5. Das Sprühmaterial gemäß einem der Ansprüche 1 bis 4, wobei der Abbindebeschleuniger Calciumaluminat enthält und ein Alkalimetallaluminat und/oder ein Alkalimetallcarbonat.

6. Das Sprühmaterial gemäß einem der Ansprüche 1 bis 5, wobei der Zementmörtel weiterhin ein Phosphat enthält.

7. Das Sprühmaterial gemäß einem der Ansprüche 1 bis 6, das weiterhin eine oder mehrere Beimischungen enthält ausgewählt aus der Gruppe bestehend aus Aminen, staubreduzierenden Stoffen, Fasermaterialien, Sulfiten, Wasserreduktionsmittel, Abbindungsverzögerer, Abbindungsbeschleuniger und ultrafeine Pulver.

8. Sprühverfahren, das die Verwendung des Sprühmaterials gemäß einem der Ansprüche 1 bis 7 umfasst.

**Revendications**

1. Matériau pour pulvérisation qui comprend un mortier au ciment comprenant du ciment, du gypse et de 35 à 60 parties en poids d'eau pour 100 parties en poids de ciment, et un accélérateur de prise comprenant de l'aluminate de calcium.

2. Matériau pour pulvérisation selon la revendication 1, **caractérisé en ce que** l'accélérateur de prise comprend de l'aluminate de calcium et du gypse.

3. Matériau pour pulvérisation pouvant être obtenu par alimentation sépare sous pression d'un mortier au ciment, d'un accélérateur de prise et du gypse, dans lequel le mortier au ciment comprend du ciment et de 35 à 60 parties en poids d'eau pour 100 parties en poids de ciment, et l'accélérateur de prise comprend de l'aluminate de calcium.

4. Matériau pour pulvérisation selon l'une quelconque des revendications 1 à 3, dans lequel le ciment est un ciment ayant une surface spécifique Blaine d'au moins 4 500 cm$^2$/g et/ou un ciment comprenant un aluminate de calcium contenant du fluor.

5. Matériau pour pulvérisation selon l'une quelconque des revendications 1 à 4, dans lequel l'accélérateur de prise comprend de l'aluminate de calcium et un aluminate de métal alcalin et/ou un carbonate de métal alcalin.

6. Matériau pour pulvérisation selon l'une quelconque des revendications 1 à 5, dans lequel le mortier au ciment comprend en outre un phosphate.

7. Matériau pour pulvérisation selon l'une quelconque des revendications 1 à 6 qui comprend en outre un ou plusieurs additifs choisis dans le groupe constitué par les amines, les agents de réduction des poussières, les matières fibreuses, les sulfites, les agents de réduction de l'eau, les retardateurs de prise, les accélérateurs de prise et les poudres ultrafines.

8. Procédé de pulvérisation qui comprend l'utilisation du matériau pour pulvérisation selon l'une quelconque des revendications 1 à 7.